(19)

Europäisches
Patentamt
European
Patent Office
Office européen
des brevets

(11) **EP 4 131 459 A1**

(12)

# EUROPEAN PATENT APPLICATION
published in accordance with Art. 153(4) EPC

(43) Date of publication:
**08.02.2023 Bulletin 2023/06**

(21) Application number: **21781526.5**

(22) Date of filing: **01.04.2021**

(51) International Patent Classification (IPC):
*H01M 4/06* (1974.07)   *H01M 4/133* (2010.01)
*H01M 4/587* (2010.01)   *H01M 4/66* (1974.07)
*H01G 11/06* (2013.01)   *H01G 11/28* (2013.01)
*H01G 11/36* (2013.01)   *H01G 11/50* (2013.01)
*H01M 10/0525* (2010.01)   *C01B 32/18* (2017.01)
*H01M 6/16* (1974.07)

(52) Cooperative Patent Classification (CPC):
C01B 32/18; H01G 11/06; H01G 11/28;
H01G 11/36; H01G 11/50; H01M 4/06;
H01M 4/133; H01M 4/587; H01M 4/66; H01M 6/16;
H01M 10/0525; Y02E 60/10

(86) International application number:
**PCT/JP2021/014103**

(87) International publication number:
**WO 2021/201199 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.04.2020   JP 2020066211
18.01.2021   JP 2021005803**

(71) Applicants:
• **National University Corporation Tokai National
Higher Education and Research System
Nagoya-shi, Aichi 464-8601 (JP)**
• **Fujitusyou Co., Ltd.
Tokyo, 104-0033 (JP)**

(72) Inventors:
• **HORI, Masaru**
**Nagoya-shi, Aichi 464-8601 (JP)**
• **ODA, Osamu**
**Nagoya-shi, Aichi 464-8601 (JP)**
• **KATO,  Masaaki**
**Tokyo 104-0033 (JP)**
• **YU, Xiaoling**
**Tokyo 104-0033 (JP)**

(74) Representative: **v. Bezold & Partner Patentanwälte
- PartG mbB
Ridlerstraße 57
80339 München (DE)**

(54) **POWER STORAGE DEVICE AND ELECTRODE FOR POWER STORAGE DEVICE**

(57)    The purpose of the present technology is to provide an electrode for power storage device and a power storage device that make it possible to involve more lithium ions in a charge-discharge reaction. A lithium-ion secondary battery (LiB1) has: a positive electrode current collector (P1); a positive electrode active material layer (P2) on the positive electrode current collector (P1); a negative electrode current collector (N1); and a negative electrode active material layer (N2) on the negative electrode current collector (N1). The negative electrode active material layer (N2) has a carbon nanowall (CNW1). The carbon nanowall (CNW1) is capable of involving, in the charge-discharge reaction, two or more lithium ions per carbon atom in a single charge or discharge.

[Fig. 1]

**Description**

**TECHNICAL FIELD**

The technical field of the present specification relates to a power storage device and an electrode for power storage device, using a carbon material(s).

**BACKGROUND ART**

Secondary batteries, electric double layered capacitors, and the like can be listed as chargeable and dischargeable power storage devices. Moreover, lithium-ion secondary batteries, lithium-ion primary batteries, and lithium-ion capacitors can be listed as power storage devices using lithium ions, for example.

For example, Patent Literature 1 discloses a lithium-ion secondary battery including a positive electrode, a negative electrode, a separator, and a nonaqueous electrolytic solution. A technology using lithium cobaltate or lithium nickelate as the positive-electrode active material and using carbon as the negative-electrode active material is a disclosed (in the scope of claims and working examples in Patent Literature 1). Graphite is used as the carbon material in many cases. Graphite can occlude or release one lithium ion per six carbon atoms in a six-membered ring.

**CITATION LIST**

**Patent Literatures**

Patent Literature 1: Japanese Patent No. 2668678

**DISCLOSURE OF INVENTION**

**PROBLEM TO BE SOLVED BY THE INVENTION**

Currently, the maximum weight energy density of lithium-ion secondary batteries is approximately 250 Wh/kg. If the weight energy density of the secondary battery is improved, for example, an output power and a cruising range of an electric vehicle will be improved. Moreover, long duration operation of electronic devices can also be realized. For that purpose, it is preferable that the positive-electrode active material or negative-electrode active material can occlude or release more lithium ions. Alternatively, it is preferable to be able to involve more lithium ions or lithium atoms in chemical reactions even by methods except for occlusion or release.

The problem to be solved by the technology disclosed herein is to provide an electrode for power storage device and a power storage device that make it possible to involve more lithium ions in a charge-discharge reaction.

**Solution to Problem**

An electrode for power storage device in a first aspect includes a current collector and an active material layer on the current collector. The active material layer includes a carbon nanowall. The carbon nanowall is capable of involving, in a charge-discharge reaction, two or more lithium ions per carbon atom in a single charge or discharge.

The present electrode for power storage device includes a carbon nanowall. The carbon nanowall is capable of involving, in a charge-discharge reaction, two or more lithium ions per carbon atom in a single charge or discharge.

In contrast, graphite used for conventional electrodes can occlude or release one lithium ion per six carbon atoms in a six-membered ring. More specifically, graphite can occlude or release one lithium ion per six carbon atoms.

The electrode for power storage device using the carbon nanowall can involve 12 times or more lithium ions in the charge-discharge reaction as compared with the electrode using graphite. Therefore, the power storage device including the electrode using the carbon nanowall has excellent volume energy density and weight energy density. Accordingly, the present power storage device can operate electronic devices, home electronics, vehicles, and the like over a long duration with a single charge.

**EFFECT OF THE INVENTION**

Provided herein are the electrode for power storage device and the power storage device that make it possible to involve more lithium ions in the charge-discharge reaction.

## BRIEF DESCRIPTION OF DRAWINGS

[FIG. 1] FIG. 1 is a schematic structure diagram illustrating a lithium-ion secondary battery LiB1 according to a first embodiment.

[FIG. 2] FIG. 2 is a diagram conceptually illustrating a structure of a carbon nanowall CNW1 in the lithium-ion secondary battery LiB1 according to the first embodiment.

[FIG. 3] FIG. 3 is a diagram schematically illustrating a cross section of the carbon nanowall CNW1 in the lithium-ion secondary battery LiB1 according to the first embodiment.

[FIG. 4] FIG. 4 is a diagram schematically illustrating an inclination of the carbon nanowall in the lithium-ion secondary battery LiB1 according to the first embodiment.

[FIG. 5] FIG. 5 is a diagram illustrating the carbon nanowall in the lithium-ion secondary battery LiB1 according to the first embodiment viewed in a perpendicular orientation from a surface of a negative electrode current collector N1.

[FIG. 6] FIG. 6 is a diagram for describing a case where an average angle $\theta$ between the first surface N1a of the negative electrode current collector N1 and the carbon nanowall is small.

[FIG. 7] FIG. 7 is a diagram hypothetically illustrating an aspect of an occlusion of lithium ions and a deposition of lithium or lithium compounds by the carbon nanowall CNW1 in the lithium-ion secondary battery LiB1 according to the first embodiment.

[FIG. 8] FIG. 8 is a schematic structure diagram illustrating a configuration of a manufacturing apparatus for growing the carbon nanowall CNW1 in the lithium-ion secondary battery LiB1 according to the first embodiment.

[FIG. 9] FIG. 9 is a schematic structure diagram illustrating a lithium-ion capacitor LiC1 according to a second embodiment.

[FIG. 10] FIG. 10 is a schematic structure diagram illustrating a lithium-ion capacitor LiC2 of a modified example according to the second embodiment.

[FIG. 11] FIG. 11 shows a microphotograph of carbon nanowalls viewed from a direction perpendicular to a plate surface of a metal plate.

[FIG. 12] FIG. 12 shows a microphotograph of the carbon nanowalls illustrating a cross section thereof perpendicular to the plate surface of the metal plate.

[FIG. 13] FIG. 13 is a graphic chart illustrating a relationship between capacity and voltage of a lithium-ion secondary battery using a carbon nanowall with a height of 1 $\mu$m for the negative electrode.

[FIG. 14] FIG. 14 is a graphic chart illustrating a relationship between capacity and voltage of a lithium-ion secondary battery using a carbon nanowall with a height of 4 $\mu$m for the negative electrode.

[FIG. 15] FIG. 15 is a graphic chart illustrating a relationship between capacity and voltage of a lithium-ion secondary battery using a carbon nanowall with a height of 10 $\mu$m for the negative electrode.

[FIG. 16] FIG. 16 is a graphic chart illustrating a relationship between capacity and voltage of a lithium-ion secondary battery using graphite for the negative electrode.

[FIG. 17] FIG. 17 is a diagram for comparing charging voltages of lithium-ion secondary batteries in a case of using the carbon nanowall for the negative electrode and using graphite for the negative electrode.

[FIG. 18] FIG. 18 is a graphic chart illustrating discharging characteristics of a lithium-ion secondary battery using a negative electrode including a carbon nanowall with a height of 0 nm.

[FIG. 19] FIG. 19 is a graphic chart illustrating discharging characteristics of a lithium-ion secondary battery using a negative electrode including a carbon nanowall with a height of 20 nm.

[FIG. 20] FIG. 20 is a graphic chart illustrating discharging characteristics of a lithium-ion secondary battery using a negative electrode including a carbon nanowall with a height of 50 nm.

[FIG. 21] FIG. 21 is a graphic chart illustrating discharging characteristics of a lithium-ion secondary battery using a negative electrode including a carbon nanowall with a height of 100 nm.

[FIG. 22] FIG. 22 is a graphic chart illustrating discharging characteristics of a lithium-ion secondary battery using a negative electrode including a carbon nanowall with a height of 200 nm.

[FIG. 23] FIG. 23 is a graphic chart illustrating discharging characteristics of a lithium-ion secondary battery using a negative electrode including a carbon nanowall with a height of 500 nm.

[FIG. 24] FIG. 24 is a scanning electron micrograph illustrating a surface of the carbon nanowall with a height of 500 nm.

[FIG. 25] FIG. 25 is a scanning electron micrograph illustrating a cross section of the carbon nanowall with the height of 500 nm.

[FIG. 26] FIG. 26 is a scanning electron micrograph illustrating a surface of the carbon nanowall with a height of 50 nm.

[FIG. 27] FIG. 27 is a scanning electron micrograph illustrating a cross section of the carbon nanowall with the height of 50 nm.

[FIG. 28] FIG. 28 is a scanning electron micrograph (Part 1) illustrating a carbon nanowall after repeating charging and discharging.

[FIG. 29] FIG. 29 is a scanning electron micrograph (Part 2) illustrating the carbon nanowall after repeating charging and discharging.

[FIG. 30] FIG. 30 is a scanning electron micrograph (Part 3) illustrating the carbon nanowall after repeating charging and discharging.

[FIG. 31] FIG. 31 is a scanning electron micrograph illustrating a cross section of a negative electrode in the lithium-ion secondary battery after charging.

[FIG. 32] FIG. 32 is a graphic chart illustrating an X-ray diffraction result of the negative electrode in the lithium-ion secondary battery after charging.

## BEST MODE(S) FOR CARRYING OUT THE INVENTION

Hereinafter, specific embodiments will now be described with reference to the drawings, listing an electrode for power storage device and a power storage device as examples. In this specification, a power storage device is a device that can be charged and discharged. The power storage devices include lithium-ion primary batteries, lithium-ion secondary batteries, lithium-ion capacitors, and other devices that are charged and discharged using lithium ions.

### (First Embodiment)

### 1. Lithium-ion Secondary Battery

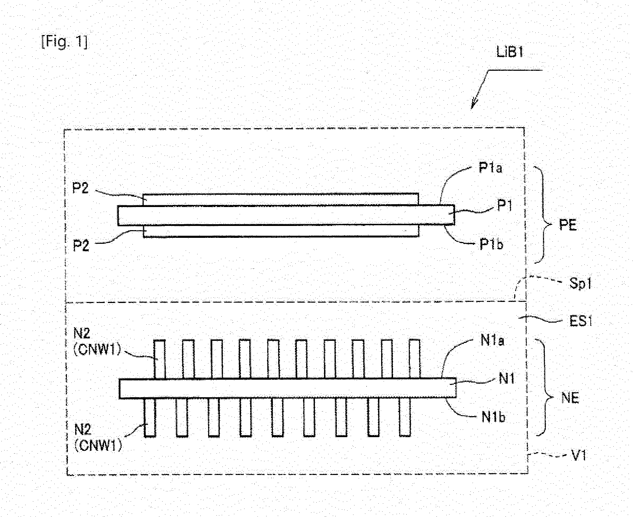

FIG. 1 is a schematic structure diagram illustrating a lithium-ion secondary battery LiB1 according to the first embodiment. The lithium-ion secondary battery LiB1 includes a positive electrode PE, a negative electrode NE, a separator Sp1, an electrolytic solution ES1, and a vessel V1.

The positive electrode PE is a positive electrode of the lithium-ion secondary battery LiB1. The positive electrode PE includes a positive electrode current collector P1 and a positive electrode active material layer P2. A positive electrode active material layer P2 is formed on each of a first surface P1a and a second surface P1b of the positive electrode current collector P1.

The positive electrode current collector P1 is, for example, a metallic foil. The shape of the positive electrode current collector P1 may be any other shape. A material of the positive electrode current collector P1 is, for example, Al or Ti. The material of the positive electrode current collector P1 may be an electric conductor, such as any other metal.

The positive electrode active material layer P2 contains a positive-electrode active material, a conductive auxiliary agent, and a binder. The positive electrode active material layer P2 may contain a thickening agent or the like. For example, lithium cobaltate, lithium manganate, lithium nickelate, and a ternary system are listed as the positive-electrode active material. For example, carbon black is listed as the conductive auxiliary agent. For example, SBR is listed as the binder. For example, carboxymethylcellulose is listed as the thickening agent. Thus, the positive electrode active material layer P2 includes lithium atoms.

The negative electrode NE is a negative electrode of the lithium-ion secondary battery LiB1. The negative electrode NE includes a negative electrode current collector N1 and a negative electrode active material layer N2. A negative electrode active material layer N2 is formed on each of a first surface N1a and a second surface N1b of the negative electrode current collector N1.

The negative electrode current collector N1 is, for example, a metallic foil. The shape of the negative electrode current collector N1 may be any other shape. A material of the negative electrode current collector N1 is, for example, Cu. The material of the negative electrode current collector N1 may be an electric conductor, such as any other metal.

The negative electrode active material layer N2 contains a negative-electrode active material. The negative electrode active material layer N2 includes a carbon nanowall CNW1 as the negative-electrode active material. The carbon nanowall CNW1 will be described below.

The separator Sp1 is used for electrically insulating between the positive electrode PE and the negative electrode NE. The separator Sp1 allows the lithium ions in the electrolytic solution ES1 to permeate therethrough.

The electrolytic solution ES1 has a property of transferring the lithium ions between the positive electrode PE and the negative electrode NE. The Electrolytic solution ES1 fills the vessel V1. Electrolytic solution ES1 is a liquid obtained by dissolving, for example, a lithium salt, such as lithium hexafluorophosphate ($LiPF_6$), in dimethyl carbonate (DMC), diethyl carbonate (DEC), ethyl methyl carbonate (EMC), or the like.

The vessel V1 accommodates the positive electrode PE, the negative electrode NE, the separator Sp1, and the electrolytic solution ES1 therein. The vessel V1 includes a material that cannot easily react with the electrolytic solution ES1.

**2. Carbon Nanowall**

In this specification, the carbon nanowall is a conductive nanostructure mainly composed of carbon atoms arranged in a wall-like configuration on a base material, such as the negative electrode current collector N1.

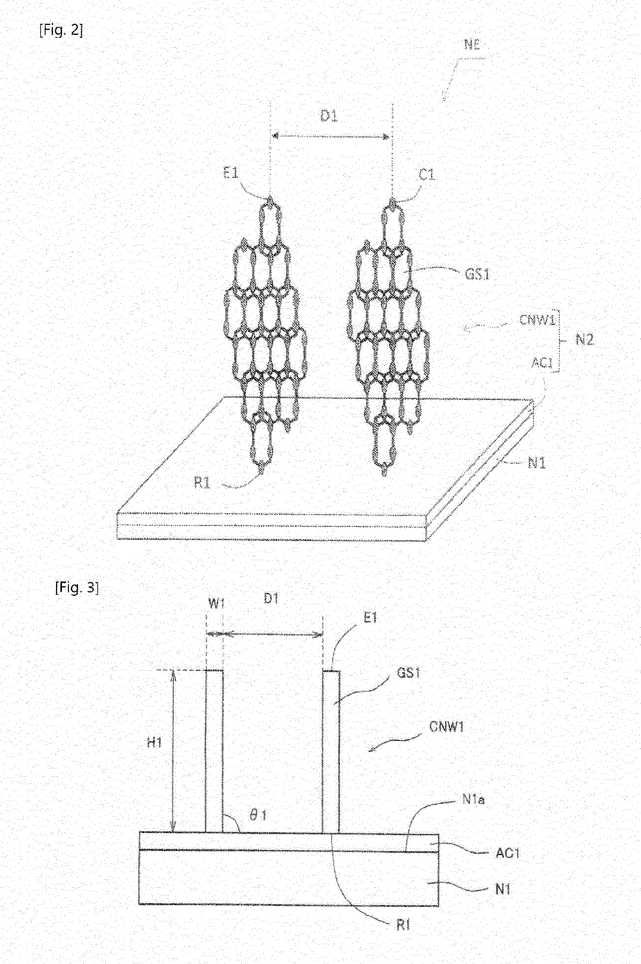

FIG. 2 is a diagram conceptually illustrating a structure of a carbon nanowall CNW1 in the lithium-ion secondary battery LiB1 according to the first embodiment. In FIG. 2, one graphene sheet GS1 is conceptually illustrated. The carbon nanowall CNW1 has electrical conductivity. The carbon nanowall CNW1 may be composed a plurality of graphene sheets GS1. The graphene sheet GS1 may be a thin film mainly composed of carbon having a six-membered ring structure, instead of a complete graphene structure. The graphene sheet GS1 may have a mosaic structure mainly composed of carbon having a six-membered ring structure. The mosaic structure is a structure where a plurality of regions having a six-membered ring structure are discretely arranged. That is, the carbon nanowall CNW1 does not have to be an all-single crystal in a six-membered ring.

The negative electrode NE includes a negative electrode current collector N1 and a negative electrode active material layer N2. The negative electrode active material layer N2 includes an amorphous carbon layer AC1 and the carbon nanowall CNW1.

The carbon nanowall CNW1 is a graphite-like substance in which around ten layers of the graphene sheets GS1 are stacked in a thickness direction of the carbon nanowall CNW1. The stacked number thereof may be other than the above-described number. Since the carbon nanowall CNW1 is a graphite-like substance, the carbon nanowall CNW1 has higher electric conductivity than that of carbon materials, such as activated carbon.

The amorphous carbon layer AC1 is located between the negative electrode current collector N1 which is electric conductor, such as a metal and the carbon nanowall CNW1. The amorphous carbon layer AC1 is a layer that can be a starting point of growth of the graphene sheet GS1 composing the carbon nanowall CNW1. The film thickness of the amorphous carbon layer AC1 is, for example, equal to or grater than 10 nm and equal to or less than 300 nm. Preferably, the film thickness thereof is equal to or grater than 10 nm and equal to or less than 100 nm. More preferably, the film thickness thereof is equal to or grater than 12 nm and equal to or less than 30 nm. It is to be noted that the amorphous carbon layer AC1 may not be necessary depending on a growing method of the carbon nanowall. The amorphous carbon layer AC1 is electrically conductive.

The carbon nanowall CNW1 has a root portion R1 at a side of t the negative electrode current collector N1 and an end portion E1 at a side opposite to the negative electrode current collector N1. The root portion R1 is a fixed portion that is being fixed to the negative electrode current collector N1 through the amorphous carbon layer AC1 in many cases. The root portion R1 is also a connection portion that is being electrically connected to the negative electrode current collector N1 or the amorphous carbon layer AC1.

In the carbon nanowall CNW1, the graphene sheet GS1 is formed in an orientation that intersects the surfaces (the first surface N1a and the second surface N1b) of the negative electrode current collector N1. In FIG. 2, the graphene sheet GS1 and the negative electrode current collector N1 are substantially perpendicular to each other. Therefore, the end of the graphene sheet GS1 has the end portion E1. The end portion E1 is a portion located at the end of the graphene sheet GS1.

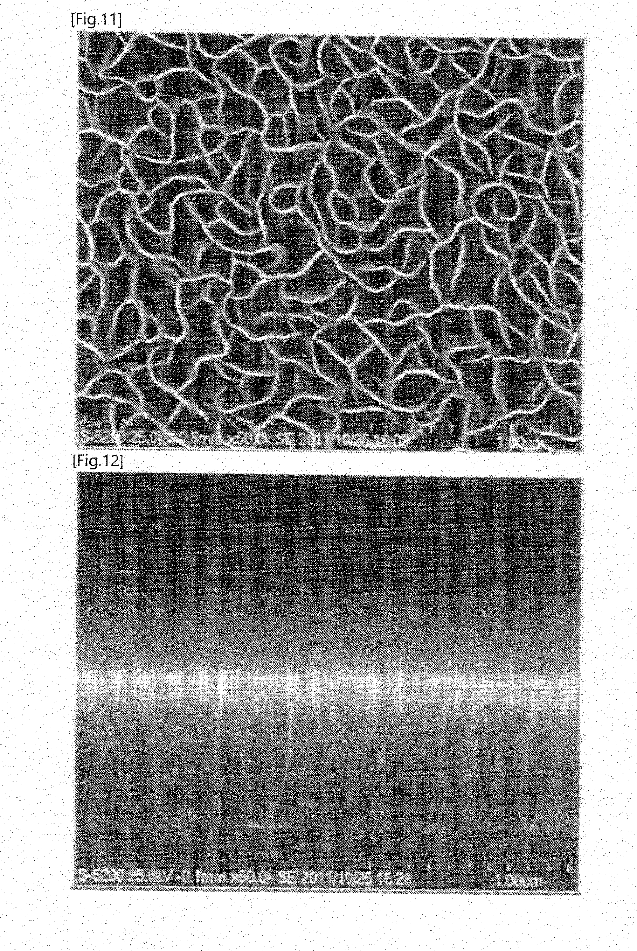

As described above, the carbon nanowall CNW1 is a graphite obtained by stacking many graphene sheets GS1. In fact, the graphene sheets GS1 are not always completely extended in parallel to each other. Since the graphene sheets GS1 grow in different directions in each initial growth nucleus, the graphene sheets GS1 actually have a randomly merged and superimposed shape (refer to FIG. 11). As illustrated in FIG. 2, a distance between the graphite having the wall-like configuration adjacent to each other is referred to as a wall spacing.

The average wall spacing D1 which is the average value of the wall spacing is related to a density of the carbon nanowall CNW1. That is, the wider the average wall spacing D1, the lower the density of the carbon nanowall CNW1. Conversely, the narrower the average wall spacing D1, the denser the carbon nanowall CNW1.

**2-1. Wall Size**

FIG. 3 is a diagram schematically illustrating a cross section of the carbon nanowall CNW1 in the lithium-ion secondary battery LiB1 according to the first embodiment. The average height H1 of the carbon nanowall CNW1 is preferably equal to or grater than 100 nm. Alternatively, the average height H1 of the carbon nanowall CNW1 may be equal to or grater than 200 nm. When the average height H1 of the carbon nanowall CNW1 is equal to or grater than 100 nm, lithium easily deposits starting from the carbon nanowall CNW1.

There is no problem even if the average height H1 of the carbon nanowall CNW1 is high. However, it requires a long time in order to form such a high carbon nanowall CNW1. From the viewpoint of productivity enhancement, the average height H1 of the carbon nanowall CNW1 is preferably equal to or less than 200 um. Preferably, the average height thereof is equal to or less than 100 um. More preferably, the average height thereof is equal to or less than 50 um. Still more preferably, the average height thereof is equal to or less than 10 $\mu$m.

Accordingly, the average height H1 of the carbon nanowall CNW1 is, for example, equal to or grater than 100 nm and equal to or less than 200 um. Preferably, the average height thereof is equal to or grater than 100 nm and equal to or less than 50 um. More preferably, the average height thereof is equal to or grater than 100 nm and equal to or less than 10 um. Alternatively, the average height H1 of the carbon nanowall CNW1 may be equal to or grater than 200 nm and equal to or less than 200 um. Alternatively, the average height thereof may be equal to or grater than 200 nm and equal to or less than 100 um. Alternatively, the average height thereof may be equal to or grater than 200 nm and equal to or less than 10 $\mu$m.

The average thickness W1 of the carbon nanowall CNW1 is equal to or grater than 0.5 nm and equal to or less than 100 nm. Preferably, the average thickness thereof is equal to or grater than 1 nm and equal to or less than 50 nm. More preferably, the average thickness thereof is equal to or grater than 1.5 nm and equal to or less than 30 nm.

A layer spacing of the graphite is approximately 0.35 nm. Therefore, the thickness of the carbon nanowall CNW1 composed of ten layers of the graphene sheets GS1 is approximately 3.5 nm. Dependent on manufacturing conditions, it is considered that the average thickness of the carbon nanowall CNW1 is approximately 3.5 nm. Typically, it is considered that the carbon nanowall CNW1 may be composed of 5 to 20 layers of the graphene sheets GS1. The thickness of he carbon nanowall CNW1 is equal to or grater than 1.5 nm and equal to or less than 7 nm.

## 2-2. Wall Spacing

The average wall spacing D1 between the carbon nanowall CNW1 and the carbon nanowall CNW1 adjacent to each other is, for example, equal to or grater than 10 nm and equal to or less than 500 nm. Preferably, the average wall spacing thereof is equal to or grater than 15 nm and equal to or less than 100 nm. More preferably, the average wall spacing thereof is equal to or grater than 20 nm and equal to or less than 50 nm. These numerical value ranges may merely be exemplifications and may be numerical values other than above values. It is noted that long walls of the carbon nanowalls do not necessarily grow in parallel to each other, and the walls may merge with each other (refer to FIG. 11). Therefore, the spacing between the carbon nanowalls CNW1 near this merging portion is narrower than the spacing between the carbon nanowalls CNW1 at other portions.

## 2-3. Wall Angle

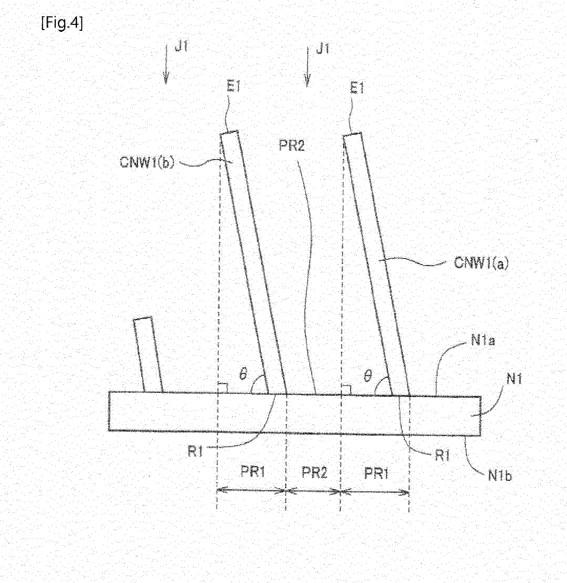

FIG. 4 is a diagram schematically illustrating an inclination of the carbon nanowall in the lithium-ion secondary battery LiB1 according to the first embodiment. FIG. 4 illustrates a case where the carbon nanowalls CNW1 are projected onto the first surface N1a of the negative electrode current collector N1.

A projection region PR1 where a carbon nanowall CNW1(a) is projected onto the first surface N1a of the negative electrode current collector N1 does not include a carbon nanowalls CNW1(b) except for the carbon nanowall CNW1(a). However, this is not the case at the merging portion between the carbon nanowalls CNW1. The electrolytic solution and the lithium ions need only be able to enter a minute region partitioned by the merging the carbon nanowalls CNW1. If the electrolytic solution and a lithium ions can enter the minute region partitioned by the carbon nanowalls CNW1, reactions required for an operation of battery will occur in the minute region.

As illustrated in FIG. 4, an intermediate region PR2 exists between the projection region PR1 and the projection region PR1. The intermediate region PR2 is a visible region that can be observed by an observer with a scanning electron microscope (SEM) or the like, when the negative electrode current collector N1 is viewed from an orientation of the arrow J1 illustrated in FIG. 4. Herein, the orientation of the arrow J1 in illustrated FIG. 4 is an orientation perpendicular to the first surface N1a of the negative electrode current collector N1.

The average angle $\theta$ between the first surface N1a of the negative electrode current collector N1 and the carbon nanowall CNW1 is equal to or grater than 80° and equal to or less than 90°. The average angle $\theta$ disclosed herein is the average value of angles of equal to or less than 90°. If one angle $\theta 1$ formed between the carbon nanowall and the negative electrode current collector N1 is an acute angle, the other angle $\theta 2$ is an obtuse angle. Among these angles, the average angle $\theta$ is obtained by averaging the smaller angles $\theta 1$.

By arranging each carbon nanowall so as to substantially perpendicularly grow, since the carbon nanowalls do not in contact with each other at the end portions E1 of the carbon nanowalls, and thereby the electrolytic solution and the lithium ions can enter between the carbon nanowalls. Therefore, the entire carbon nanowall can effectively function as an electrode.

However, this is not the case in the vicinity of where the carbon nanowalls merge with each other. When the carbon nanowalls are formed on a substrate having a large area, there may be some portions where the carbon nanowalls in contact with each other at the end portions E1 of the carbon nanowalls, but this does not degrade the overall functionality.

The average angle $\theta$ is determined by growth conditions of the carbon nanowalls, and therefore the average height H1 and the average wall spacing D1 of the carbon nanowalls should be set so that the carbon nanowalls do not in contact with each other at the upper edge of the carbon nanowall due to the average angle $\theta$. Depending on the values of the average height H1 and the average wall spacing D1, the electrolytic solution and the lithium ions cannot enter gaps between the carbon nanowalls, and therefore some of the carbon nanowalls cannot function as the electrode.

For example, when the average height H1 is 5 μm and the average wall spacing D1 is 100 nm of the carbon nanowalls, an angle of equal to or grater than 88.9° is required to avoid in contact with adjacent perpendicular walls. Alternatively, when the average height H1 is 0.6 um and the average wall spacing D1 is 100 nm of the carbon nanowalls, an angle of equal to or greater than 80.4° is required to avoid in contact with adjacent perpendicular walls.

Table 1 illustrates numerical values indicating a structure of the carbon nanowalls CNW1. However, these numerical value ranges may merely be exemplifications and are not limited to these numerical value ranges.

[Table 1]

| Wall Height | 100 nm or more | 200 μm or less |
|---|---|---|
| Wall Thickness | 0.5 nm or more | 100 nm or less |
| Wall Spacing | 10 nm or more | 500 nm or less |
| Wall Angle | 80° or more | 90° or less |

**2-4. Surface Area of Carbon Nanowall**

A surface area of the carbon nanowall CNW1 will now be described. For simplicity of understanding, a shape of the carbon nanowall is assumed to be a grid shape. Since the wall rarely extends linearly, the shape of the carbon nanowall actually deviates from the grid shape.

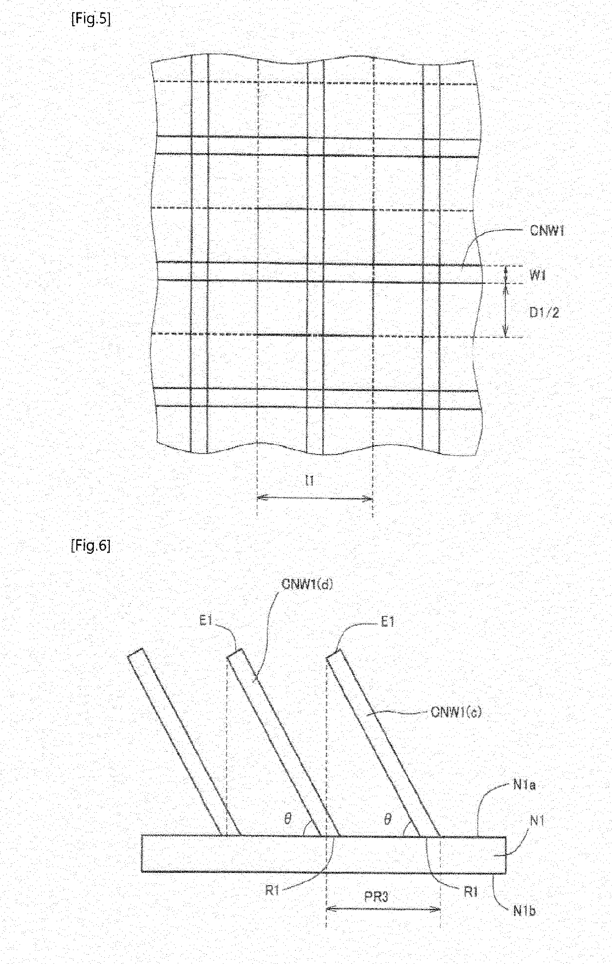

FIG. 5 is a diagram illustrating the carbon nanowall in the lithium-ion secondary battery LiB1 according to the first embodiment viewed in a perpendicular orientation from a surface of a negative electrode current collector N1. In FIG. 5, the shape of the carbon nanowall is assumed to be a grid shape as described above.

Assuming that the spacing I1 of a pitch of the carbon nanowalls, the area SS1 of a square with the spacing I1 on one side is $I1^2$. The area SS1 is a surface area of a carbon material when the surface of a negative electrode current collector N1 is solidly coated with the carbon material, instead of the carbon nanowall. In FIG. 5, the area SS2 of the side surface of the carbon nanowall occupying a square of which one side is the spacing I1, which is a repeat unit, is expressed by the following equation.

$$SS2 = 8 \times (D1/2) \times H1$$
$$= 4 \times D1 \times H1$$

where H1 is the average height of the carbon nanowall and
D1 is the average wall spacing.

The surface area SS3 of the carbon nanowall in the square region of which one side is the spacing I1 in the case of existing the carbon nanowall is expressed by the following equation.

$$SS3 = SS1 + SS2$$

Accordingly, the ratio SS3/SS1 indicates an increasing rate of the surface area depending on the presence or absence of the carbon nanowall.

$$SS3/SS1 = (4 \times D1 \times H1 + I1^2)/I1^2$$
$$\neq 4 \times D1 \times H1/I1^2$$
$$\neq 4 \times H1/D1$$

where H1>>I1 and D1≠I1.

Thus, the higher the height of the carbon nanowalls and the narrower the spacing between the carbon nanowalls, the larger the surface area of the carbon material of the lithium-ion secondary battery LiB1.

Table 2 is a table illustrating a relationship between the size and angle of the carbon nanowall and the increasing rate of the surface area. It is considered that the larger the surface area of the carbon nanowalls, the larger the number of lithium ions that react on the surface of the active material layer. Therefore, it is considered that the larger the surface area of the carbon nanowalls, the faster the charge and discharge rate of the lithium-ion secondary battery LiB1.

As illustrated in Table 2, when the average angle θ between the first surface N1a of the negative electrode current collector N1 and the carbon nanowall is equal to or greater than 80° and equal to or less than 90°, the surface area of the carbon material in the lithium-ion secondary battery LiB1 can be increased equal to or greater than 20 times. Preferably, the average angle θ is equal to or greater than 83°. More preferably, the average angle θ is equal to or greater than 85°. Still more preferably, the average angle θ is equal to or greater than 88°. Moreover, in the case of equal to or greater than 89°, the increasing rate of the surface area is equal to or greater than approximately 400 times.

[Table 2]

| Wall Height (μm) | Wall Spacing (nm) | Wall Angle (°) | Increasing Rate of Surface Area (times) |
|---|---|---|---|
| 1.0 | 200 | 78.5 | 20 |
| 1.0 | 50 | 87.1 | 80 |
| 2.0 | 400 | 78.5 | 20 |
| 2.0 | 50 | 88.6 | 160 |
| 5.0 | 500 | 84.3 | 40 |
| 5.0 | 50 | 89.4 | 400 |
| 10.0 | 50 | 89.7 | 800 |
| 10.0 | 20 | 89.9 | 2000 |
| 20.0 | 50 | 89.9 | 1600 |
| 20.0 | 20 | 89.9 | 4000 |
| 30.0 | 50 | 89.9 | 2400 |
| 30.0 | 20 | 89.9 | 6000 |
| 50.0 | 50 | 89.9 | 4000 |
| 50.0 | 20 | 89.9 | 10000 |

### 2-5. When Average Angle is Small

There will now be described a case where an average angle θ between the first surface N1a of the negative electrode current collector N1 and the carbon nanowall is small.

FIG. 6 is a diagram for describing a case where an average angle θ between the first surface N1a of the negative electrode current collector N1 and the carbon nanowall is small. As illustrated in FIG. 6, a projection region PR3 where a carbon nanowall CNW1(c) is projected onto the first surface N1a of the negative electrode current collector N1 includes a carbon nanowalls CNW1(d) except for the carbon nanowall CNW1(c).

When the end portion E1 of the carbon nanowall CNW1(c) is projected onto the first surface N1a of the negative electrode current collector N1, the end portion E1 of the carbon nanowall CNW1(c) crosses a side surface of the adjacent carbon nanowall CNW1(d).

Thus, when the average angle θ is small, it is difficult for the electrolytic solution to enter the vicinity of the root portion R1 of the carbon nanowalls CNW1. If the electrolytic solution does not cover the entire carbon nanowall, the battery capacity is reduced by the corresponding amount.

### 3. Charge-discharge Reaction Involving Lithium Ions

### 3-1. Charge-discharge Reaction

The negative electrode NE includes the carbon nanowall CNW1. The carbon nanowall CNW1 is capable of involving, in the charge-discharge reaction, two or more lithium ions per carbon atom in a single charge or discharge.

The charge-discharge reaction is, for example, a chemical reaction expressed by the following chemical equation.

$$Li^+ + e^- \leftrightarrow Li \; ... \qquad (1)$$

$$6C + xLi^+ + xe^- \leftrightarrow C_6Li_x \; ... \qquad (2)$$

$$Li_{1-x}CoO_2 + xLi^+ + xe^- \leftrightarrow LiCoO_2 \quad ... \quad (3)$$

The equation (1) or equation (2) is, for example, a reaction that can occur inside the negative electrode active material layer N2. The equation (3) is, for example, a reaction that can occur inside the positive electrode active material layer P2. Both reactions involve the lithium ions and the electrons. The charge-discharge reaction is a chemical reaction in which the lithium ions are involved as well as the electronic transmission/reception occurs in the positive electrode PE or the negative electrode NE. This charge-discharge reaction can cause phenomena, such as occlusion or release of the lithium ions, and deposition, accumulation, adsorption, and dissolution of lithium or lithium compounds. When the lithium or the lithium compound deposited, the charge-discharge reaction can occur outside the positive electrode active material layer P2 or negative electrode active material layer N2. The type of charge-discharge reaction is changed depending on the materials of the positive electrode active material layer P2 and the negative electrode active material layer N2.

### 3-2. Deposition of Lithium in Carbon Nanowall

The carbon nanowall CNW1 includes a surface on which lithium can be deposited. Therefore, during the charging or discharging, lithium may be deposited on the surface of the carbon nanowall CNW1.

The carbon nanowall CNW1 is capable of involving, in the charge-discharge reaction, two or more lithium ions per carbon atom in a single charge or discharge. The carbon nanowall CNW1 is capable of involving, in the charge-discharge reaction, ten or more lithium ions per carbon atom in a single charge or discharge. The carbon nanowall CNW1 is capable of involving, in the charge-discharge reaction, twenty or more lithium ions per carbon atom in a single charge or discharge.

Carbon nanowall CNW1 can deposit lithium. Therefore, in principle, there is no upper limit to the number of lithium ions that can be involved in the charge-discharge reaction per carbon atom. However, the larger the number of lithium ions involved in the charge-discharge reaction per carbon atom in a single charge or discharge, the larger the volume of lithium to be deposited. Accordingly, the number of lithium ions to be involved in the charge-discharge reaction per carbon atom may be, for example, equal to or less than 100,000. Preferably, the number of lithium ions is equal to or less than 10,000. More preferably, the number of lithium ions is equal to or less than 1,000. Still more preferably, the number of lithium ions is equal to or less than 150.

The height of lithium to be deposited may be, for example, equal to or less than 200 um. Preferably, the height of lithium is equal to or less than 100 um. More preferably, the height of lithium is equal to or less than 50 $\mu$m.

For example, when 30 lithium per carbon atom is deposited on the surface of the carbon nanowall CNW1, a state thereof can be virtually expressed by the following chemical formula (composition formula).

$$Li_{30}C$$

Thus, when the lithium is deposited on the surface of the carbon nanowall CNW1, it is virtually expressed by the following chemical formula (composition formula).

$$Li_XC$$

where X is a real number equal to or greater than zero and varies with charge and discharge. Since lithium is deposited, a theoretical maximum value of X is infinite.

### 3-3. Comparison with Conventional Examples

Conventionally, one lithium ion would enter per six-membered ring of carbon atoms. A state thereof is expressed by the following formula.

$$LiC_6$$

Accordingly, the carbon nanowall CNW1 according to the first embodiment can involve extremely many lithium ions in the charge-discharge reaction compared with conventional examples. That is, the performance of the lithium-ion secondary battery LiB1 according to the first embodiment is high.

### 3-4. Occlusion State and Deposition State

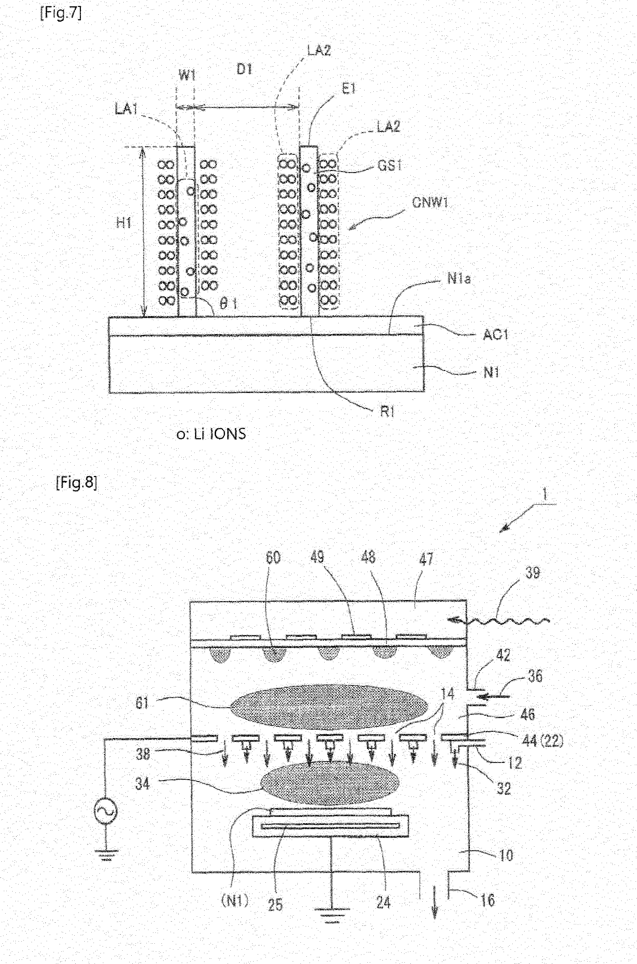

FIG. 7 is a diagram hypothetically illustrating an aspect of an occlusion of lithium ions and a deposition of lithium or lithium compounds by the carbon nanowall CNW1 in the lithium-ion secondary battery LiB1 according to the first embodiment.

A virtual example is illustrated in FIG. 7. As illustrated in the region LA1 in FIG. 7, it is considered that lithium ions will enter inside the carbon nanowall CNW1. Theoretically, the maximum lithium ion intercalation is $LiC_6$. Therefore, the number of lithium atoms per carbon atom cannot exceed 1/6.

As illustrated in the region LA2 in FIG. 7, it is considered that lithium atoms or lithium ions are adsorbed or deposited on the surface of the carbon nanowall CNW1, and lithium or lithium compound in a metallic state are deposited thereon.

As described above, the carbon nanowall CNW1 can occlude or deposit lithium. It is considered that if the occlusion of lithium is thermodynamically more advantageous than the deposition of lithium, the occlusion of lithium would occur first, the occlusion of lithium would be saturated, and then deposition of lithium would occur. It is considered that if the deposition of lithium is thermodynamically more advantageous than the occlusion of lithium, the lithium would be deposited without occlusion of the lithium occurring.

As the lithium-ion secondary battery LiB1 continues to be charged, lithium is deposited on the surface of the carbon nanowall CNW1. As the lithium-ion secondary battery LiB1 further continues to be charged, the lithium will fill gaps in the carbon nanowalls CNW1. As the lithium-ion secondary battery LiB1 still further continues to be charged, it is considered that the lithium will be deposited thereon so as to exceed the height of the carbon nanowall CNW1.

### 3-5. Other States

Phenomena, such as dissolution of lithium, and deposition, accumulation, adsorption, and dissolution of lithium compounds, can occur in addition to the occlusion or release of lithium ions, and the deposition, accumulation, and adsorption of lithium.

### 4. Manufacturing Apparatus

There will now be described a manufacturing apparatus for forming the carbon nanowall CNW1 on the surface of the negative electrode current collector N1.

FIG. 8 is a schematic structure diagram illustrating a configuration of a manufacturing apparatus 1 for growing the carbon nanowall CNW1 in the lithium-ion secondary battery LiB1 according to the first embodiment. The manufacturing apparatus 1 includes a plasma generation chamber 46 and a reaction chamber 10. A plasma generation chamber 46 is used for generating plasma inside the plasma generation chamber and also for generating radicals to be supplied to the reaction chamber 10. The reaction chamber 10 is used for forming the carbon nanowall CNW1 using the radicals generated in the plasma generation chamber 46.

The manufacturing apparatus 1 includes a waveguide 47, a quartz window 48, and a slot antenna 49. The waveguide 47 is used for introducing microwave 39. The slot antenna 49 is used for introducing the microwave 39 from the quartz window 48 into the plasma generation chamber 46.

The plasma generation chamber 46 is used for generating surface wave plasma (SWP) with the microwave 39. A radical source inlet 42 is provided in the plasma generation chamber 46. The radical source inlet 42 is used for supplying a gas serving as a radical source to the inside of plasma 61 generated in the plasma generation chamber 46.

A partition wall 44 is provided between the plasma generation chamber 46 and the reaction chamber 10. The partition wall 44 is used for partitioning between the plasma generation chamber 46 and the reaction chamber 10. The partition wall 44 also serves as a first electrode 22 for applying voltage. Moreover, through holes 14 are formed in the partition wall 44. It is used for supplying the radicals generated in the plasma generation chamber 46 to the reaction chamber 10.

The reaction chamber 10 is used for generating capacitively coupled plasma (CCP). Moreover, the reaction chamber 10 is also used for forming the carbon nanowall CNW1 on the negative electrode current collector N1. The reaction chamber 10 includes a second electrode 24, a heater 25, a raw material inlet 12, and an exhaust port 16. The second electrode 24 is used for applying voltage between the first electrode 22 and the second electrode. A heater 25 is used for heating the negative electrode current collector N1 to control a temperature of the negative electrode current collector N1. The raw material inlet 12 is used for supplying carbon based gas 32 serving as a raw material of the carbon nanowall. The exhaust port 16 is connected to a vacuum pump and the like. The vacuum pump is used for adjusting a pressure inside the reaction chamber 10.

As described above, the partition wall 44 serves as the first electrode 22 for applying the voltage between the second electrode 24 and the first electrode. An electronic power supply and a circuit are connected to the first electrode 22. They are used for temporally controlling a potential of the first electrode 22. The second electrode 24 is used for applying the voltage between the first electrode 22 and the second electrode. Moreover, the second electrode 24 is also used for a mounting base for mounting the negative electrode current collector N1. The second electrode 24 is grounded. A distance between the first electrode 22 and the second electrode 24 is approximately 5 cm. Of course, it is not limited to this value.

## 5. Manufacturing Method of Negative Electrode

### 5-1. Amorphous Carbon Layer Formation Process

First, the negative electrode current collector N1 before forming the carbon nanowall CNW1 is mounted inside the manufacturing apparatus 1. At this time, the first surface N1a of the negative electrode current collector N1 is up and the second surface N1b is in contact with the second electrode 24. Next, the microwaves 39 are introduced into the waveguide 47.The microwaves 39 are introduced into the plasma generation chamber 46 from the quartz window 48 by the slot antenna 49. Consequently, high density plasma 60 is generated.

Then, this high density plasma 60 diffuses inside the plasma generation chamber 46 to become the plasma 61. This plasma 61 contains radical source ions supplied from the radical source inlet 42. Hydrogen is used as the radical source. Alternatively, oxygen, nitrogen, or other gases may be used thereas. Most of the ions in the plasma 61 collide with the partition wall 44 and are neutralized to become radicals. The radicals 38 pass through the through hole 14 of the partition wall 44 and enter the reaction chamber 10.

In addition to the radicals 38, the carbon based gas 32 is supplied from the raw material inlet 12 to inside the reaction chamber 10. The carbon based gas 32 is, for example, $CH_4$ or $C_2F_6$. Of course, it may be anything else. Then, the voltage is applied between the first electrode 22 and the second electrode 24. Consequently, the plasma 34 is generated inside the reaction chamber 10.

In the atmosphere of the plasma 34, particles and the like derived from the carbon based gas 32, which is the raw material, and radicals 38 are mixed. Then, the amorphous carbon layer AC1 grows on the surface of the negative electrode current collector N1 in the atmosphere of this plasma 34.

Thus, the carbon based gas plasmaized inside the manufacturing apparatus 1 is supplied to the negative electrode current collector N1, and thereby the amorphous carbon layer AC1 is formed on the negative electrode current collector N1.

A pressure inside the reaction chamber 10 is within a range of equal to or greater than 5 mTorr and equal to or less than 2000 mTorr (equal to or greater than 0.65 Pa and equal to or less than 267 Pa) . A temperature of the negative electrode current collector N1 is within a range equal to or greater than 100°C and equal to or less than 800°C.Of course, these numerical value ranges may merely be exemplifications and are not limited to these numerical value ranges.

### 5-2. Carbon Nanowall Growth Process

Subsequently, inside the manufacturing apparatus 1, the carbon nanowall CNW1 is grown on the amorphous carbon layer AC1. The plasma 61 is generated in the same manner as the case of growing the amorphous carbon layer AC1. Hydrogen gas is used as the radical source of the radicals 38, and $CH_4$ or $C_2F_6$, for example, is used as the carbon based gas 32.

Thus, the carbon based gas plasmaized inside the manufacturing apparatus 1 is supplied to the negative electrode current collector N1, and thereby the carbon nanowall is grown on the amorphous carbon layer AC1.

The pressure inside the reaction chamber 10 is within a range of equal to or greater than 5 mTorr and equal to or less than 2000 mTorr (equal to or greater than 0.65 Pa and equal to or less than 267 Pa). The temperature of the negative electrode current collector N1 is within a range equal to or greater than 100°C and equal to or less than 800°C. Of course, these numerical value ranges may merely be exemplifications and are not limited to these numerical value ranges.

### 5-3. Cleaning Process

After the growth of the carbon nanowall CNW1 has progressed to some extent, the negative electrode current collector N1 is removed from the manufacturing apparatus 1. The height H1 of the carbon nanowall CNW1 at this case is, for example, 1000 nm.

Next, the inside of the manufacturing apparatus 1 is cleaned. The carbon material is scraped off from the internal wall surface thereof. Alternatively, the carbon material is removed from the internal wall surface by means of hydrogen plasma or the like. Thus, in this process, while stopping the growth process, the inside of the manufacturing apparatus 1 is cleaned.

### 5-4. Repetition of Processes, etc.

Then, the carbon nanowall growth process and the cleaning process described above are repeated. Consequently, the carbon nanowall CNW1 having a sufficient height H1 can be obtained. Furthermore, the negative electrode current collector N1 is turned over in order to form the carbon nanowall CNW1 on the second surface N1b of the negative electrode current collector N1. It is noted that even if the negative electrode current collector N1 is disposed so that the carbon nanowall CNW1 is facing down, there is no problem with the carbon nanowall CNW1.

### 6. Manufacturing Method of Lithium-ion Secondary Battery

### 6-1. Negative Electrode Manufacturing Process

As described above, the negative electrode NE is manufactured. The negative electrode active material layer N2 is formed on the negative electrode current collector N1.

### 6-2. Positive Electrode Manufacturing Process

Next, the positive electrode PE is manufactured. A coating liquid is coated on the positive electrode current collector P1 to be made to dry. The coating liquid contains a positive-electrode active material, a conductive auxiliary agent, and a binder. Moreover, a press process may be implemented to the positive electrode PE.

### 6-3. Electrolytic Solution Injection Process

Next, the positive electrode PE and the negative electrode NE are alternately arranged through separator Sp1, inside the vessel V1. Then, the electrolytic solution ES1 is injected into the inside of the vessel V1. Subsequently, an opening of the vessel V1 may be sealed.

### 6-4. Other Processes

Other processes, such as the aging process, may be implemented.

### 7. Effect of First Embodiment

The negative electrode NE in the lithium-ion secondary battery LiB1 according to the first embodiment includes the carbon nanowall CNW1. The surface area of the carbon nanowall CNW1 is sufficiently large. The carbon nanowall CNW1 is capable of involving extremely many lithium ions per carbon atom in the charge-discharge reaction. Therefore, the capacity of the lithium-ion secondary battery LiB1 is extremely large.

As described above, the carbon nanowall CNW1 is capable of involving extremely many lithium ions in the charge-discharge reaction. Therefore, the amount of the carbon nanowall CNW1 can be small. That is, the size of the negative electrode is smaller than that of the conventional example, and the weight of the negative electrode is lighter than that of the conventional example. Accordingly, the volume energy density and the weight energy density of the lithium-ion secondary battery LiB1 are improved compared with the conventional example.

### 8. Modified Examples

### 8-1. Formed Surface of Positive Electrode Active Material Layer or Negative Electrode Active Material Layer

The positive electrode active material layer P2 may be formed only on one surface of the positive electrode current collector P1. The negative electrode active material layer N2 may be formed only on one surface of the negative electrode current collector N1.

### 8-2. Carbon Nanowall of Positive Electrode

Depending on the type of the power storage device, the carbon nanowall may be formed on the positive electrode current collector P1. Even in this case, the electrode for power storage device includes the current collector and the active material layer on the current collector. The active material layer includes the carbon nanowall.

### 8-3. Amorphous Carbon Layer

The negative electrode NE does not need to have the amorphous carbon layer AC1. In that case, the carbon nanowall CNW1 is formed directly on the negative electrode current collector N1. The amorphous carbon layer AC1 may or may not function as the negative-electrode active material.

### 8-4. Amorphous Carbon on Carbon Nanowall CNW1

Moreover, the surface of the carbon nanowall CNW1 may be covered with amorphous carbon immediately after the growth of the carbon nanowall CNW1. This amorphous carbon can be removed by $H_2O_2$.

### 8-5. Stacked Structure

The electrode may be a stacked structure obtained by stacking the positive electrode PE and the negative electrode NE. In the stacked structure, the positive electrode PE and the negative electrode NE are alternately stacked, and the separator Sp1 is inserted between the positive electrode PE and the negative electrode NE.

### 8-6. Cleaning Process

The cleaning process may be omitted depending on the height of the carbon nanowall CNW1. It may be omitted depending on the manufacturing apparatus 1.

### 8-7. Combination

The above-described modified examples may be freely combined with one another.

### (Second Embodiment)

There will now be described a second embodiment.

### 1. Lithium-ion Capacitor

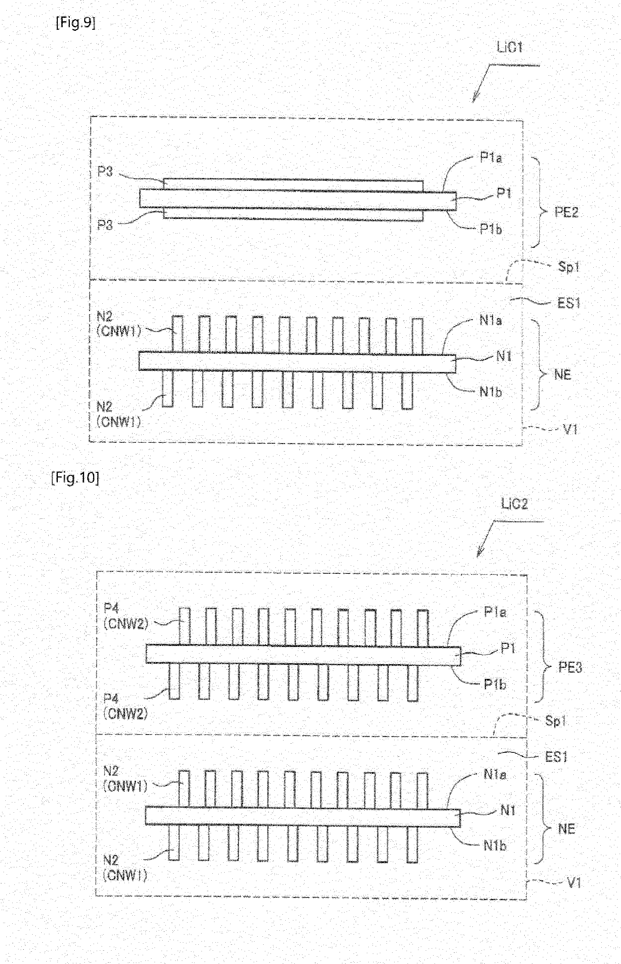

FIG. 9 is a schematic structure diagram illustrating a lithium-ion capacitor LiC1 according to a second embodiment. The lithium-ion capacitor LiC1 includes a positive electrode PE2, a negative electrode NE, a separator Sp1, an electrolytic solution ES1, and a vessel V1.
The positive electrode PE2 includes a positive electrode current collector P1 and a positive electrode active material layer P3. The positive electrode active material layer P3 is, for example, activated carbon.

### 2. Modified Examples

FIG. 10 is a schematic structure diagram illustrating a lithium-ion capacitor LiC2 of a modified example according to the second embodiment. The lithium-ion capacitor LiC2 includes a positive electrode PE3, a negative electrode NE, a separator Sp1, na electrolytic solution ES1, and a vessel V1.
The positive electrode PE3 includes a positive electrode current collector P1 and a positive electrode active material layer P4. The positive electrode active material layer P4 includes a carbon nanowall CNW2. The carbon nanowall CNW2 of the positive electrode PE3 is the same as the carbon nanowall CNW1 of the negative electrode NE. Of course, conditions, etc. of the walls may be changed.

### (Third Embodiment)

There will now be described a third embodiment.
A basic structure of a lithium-ion secondary battery according to the third embodiment is the same as the basic structure of the lithium-ion secondary battery LiB1 according to the first embodiment.

### 1. Amount of Active Material Layer

As described in the first embodiment, the carbon nanowall CNW1 is capable of involving extremely many lithium ions in the charge-discharge reaction. Therefore, the negative electrode active material layer N2 is extremely lighter and has smaller volume than those of the positive electrode active material layer P2.

The number of lithium atoms that the positive electrode active material layer P2 can contain per unit area is equal to or greater than twice the number of carbon atoms that the negative electrode active material layer N2 can contain per unit area. The number of lithium atoms that the positive electrode active material layer P2 can contain per unit area is preferably equal to or greater than 100 times of the number of carbon atoms that the negative electrode active material layer N2 can contain per unit area. The number of lithium atoms that the positive electrode active material layer P2 can contain per unit area is preferably equal to or less than 100,000 times of the number of carbon atoms that the negative electrode active material layer N2 can contain per unit area. The upper limit herein is limited by the volume of lithium to be deposited.

## 2. Effect of Third Embodiment

The number of the carbon atoms in the lithium-ion secondary battery according to the third embodiment is small. Therefore, the volume energy density and the weight energy density of this lithium-ion secondary battery are high. Accordingly, this lithium-ion secondary battery can contribute to a low-carbon society.

## 3. Modified Examples

### 3-1. Lithium-ion Capacitor

The technology of the third embodiment can be similarly applied to lithium-ion capacitors.

## Practical examples

## (Experiments)

## 1. Carbon Nanowall on Current Collector

### 1-1. Manufacturing Method

A carbon nanowall is grown on a metal plate made by Ti, using the manufacturing apparatus 1.

### 1-2. Carbon Nanowall

FIG. 11 shows a microphotograph of carbon nanowalls viewed from a direction perpendicular to a plate surface of a metal plate. As illustrated in FIG. 11, the carbon nanowalls grow randomly. Moreover, the wall-like walls are growing and then merging with each other. However, the spacing therebetween is uniform to some extent.

FIG. 12 shows a microphotograph of the carbon nanowalls illustrating a cross section thereof perpendicular to the plate surface of the metal plate. As illustrated in FIG. 12, the carbon nanowalls are formed substantially perpendicularly to the substrate.

## 2. Lithium-ion Secondary Battery

### 2-1. Manufacturing of Lithium-ion Secondary Battery

As a practical example, the lithium-ion secondary battery LiB1 according to the first embodiment is manufactured. The positive electrode current collector P1 is aluminum, and the positive-electrode active material is lithium cobaltate. The negative electrode current collector N1 is copper, and the negative-electrode active material is a carbon nanowall. The electrolytic solution is 1M $LiPF_6$. The positive electrode active material layer is a region 1.6 cm in diameter. The negative electrode active material layer is a region 1.3 cm in diameter. The carbon nanowalls are of three heights: 1 $\mu$m, 4 $\mu$m, and 10 $\mu$m.

The weight of the lithium cobaltate is summarized in Table 3. The weight of the carbon nanowall is obtained by subtracting the weight of the substrate before growing the carbon nanowall from the weight of the substrate after growing the carbon nanowall.

[Table 3]

| | |
|---|---|
| Lithium cobaltate | 0.046 g |

(continued)

| Carbon nanowall | 0.00004 g (1 um in height) |
| Carbon nanowall | 0.00016 g (4 um in height) |
| Carbon nanowall | 0.00040 g (10 um in height) |

The positive electrode active material layer contains a lithium cobaltate, a conductive auxiliary agent, and a binder. The conductive auxiliary agent is acetylene black. The binder is PVDF. The weight ratio of the lithium cobaltate, the acetylene black, and the PVDF is 100:5:3.

Moreover, as a comparative example, a lithium-ion secondary battery including a negative electrode made of graphite instead of the carbon nanowall is manufactured. The other conditions are the same as those of the practical example. The weight of the graphite is summarized in Table 4.

[Table 4]

| Lithium cobaltate | 0.046 g |
| Graphite | 0.010 g |

**2-2. Capacity of Lithium-ion Secondary Battery**

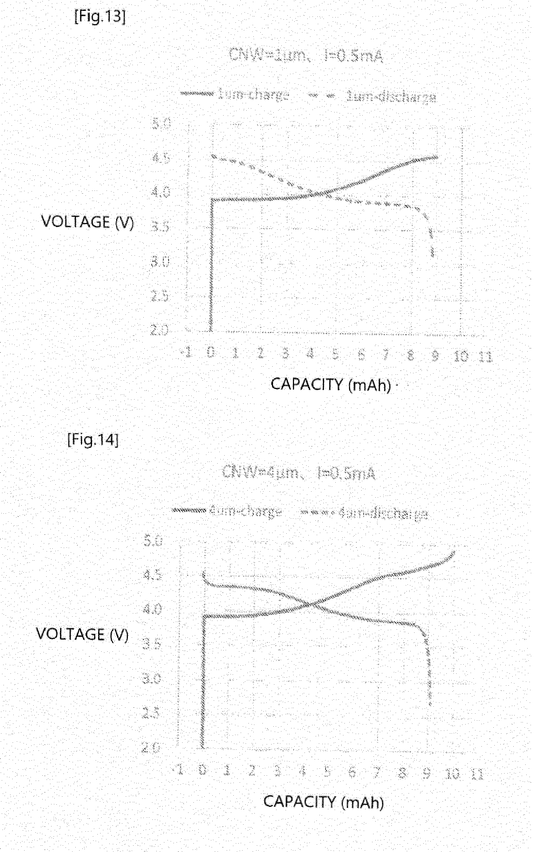

FIG. 13 is a graphic chart illustrating a relationship between capacity and voltage of a lithium-ion secondary battery using a carbon nanowall with a height of 1 $\mu$m for the negative electrode. The horizontal axis of FIG. 13 indicates charge/discharge capacity. The vertical axis of FIG. 13 indicates voltage. The charge current or discharge current is 0.5 mA. As illustrated in FIG. 13, the discharge capacity of the lithium-ion secondary battery is 9.0 mAh.

FIG. 14 is a graphic chart illustrating a relationship between capacity and voltage of a lithium-ion secondary battery using a carbon nanowall with a height of 4 $\mu$m for the negative electrode. The horizontal axis of FIG. 14 indicates charge/discharge capacity. The vertical axis of FIG. 14 indicates voltage. The charge current or discharge current is 0.5 mA. As illustrated in FIG. 14, the discharge capacity of the lithium-ion secondary battery is 9.0 mAh.

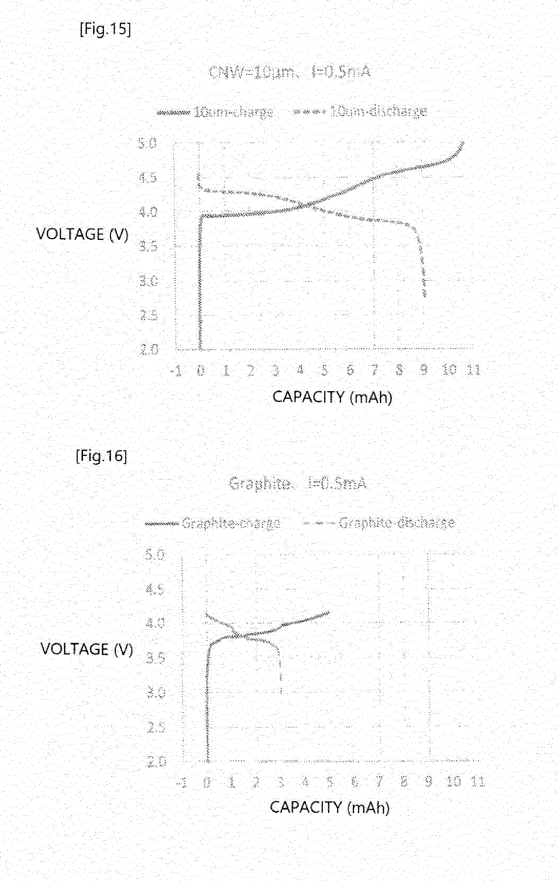

FIG. 15 is a graphic chart illustrating a relationship between capacity and voltage of a lithium-ion secondary battery using a carbon nanowall with a height of 10 $\mu$m for the negative electrode. The horizontal axis of FIG. 15 indicates charge/discharge capacity. The vertical axis of FIG. 15 indicates voltage. The charge current or discharge current is 0.5 mA. As illustrated in FIG. 15, the discharge capacity of the lithium-ion secondary battery is 9.0 mAh.

As illustrated in FIGs. 13 to 15, although the heights of the carbon nanowalls are different from one another, the discharge capacities of the lithium-ion secondary batteries are 9.0 mAh. This suggests that the charge/discharge capacity of the active material on the negative electrode side has a surplus, but it is limited by the charge/discharge capacity of the active material on the positive electrode side.

In addition, as indicated in the following equation, the measured discharge capacity reaches approximately 72% of a theoretical capacity value of lithium cobaltate, 274 mAh/g.

$$9.0 \text{ mAh} / 0.046 \text{ g} = 196 \text{ mAh/g}$$

This supports inference that it is limited due to the charge/discharge capacity of the active material at the positive electrode side.

FIG. 16 is a graphic chart illustrating a relationship between capacity and voltage of a lithium-ion secondary battery using graphite for the negative electrode. The horizontal axis of FIG. 16 indicates charge/discharge capacity. The vertical axis of FIG. 16 indicates voltage. The charge current or discharge current is 0.5 mA. As illustrated in FIG. 16, the discharge capacity of the lithium-ion secondary battery is 3 mAh.

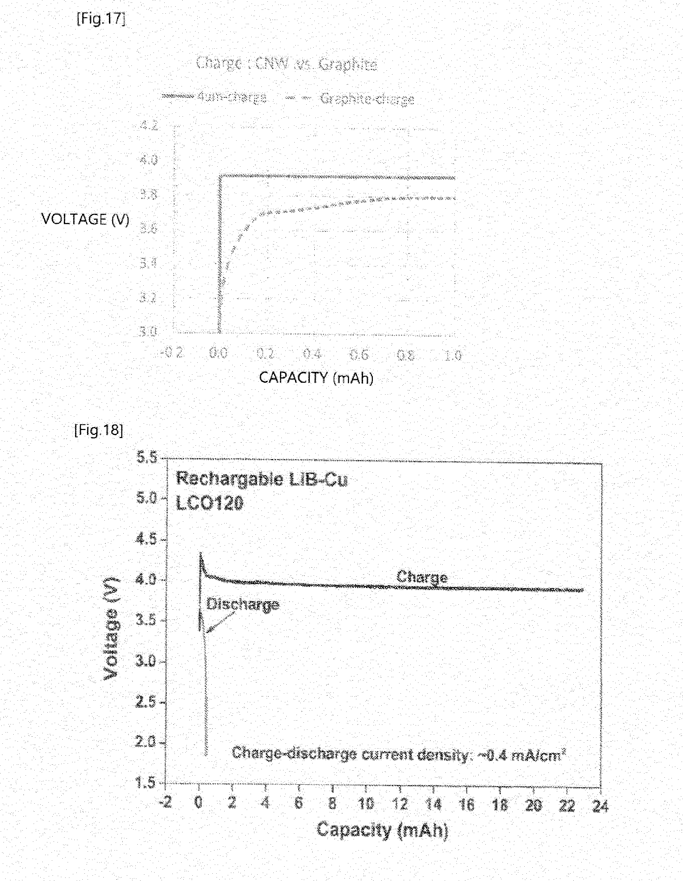

FIG. 17 is a diagram for comparing charging voltages of lithium-ion secondary batteries in a case of using the carbon nanowall for the negative electrode and using graphite for the negative electrode. The horizontal axis of FIG. 17 indicates charging capacity. The vertical axis of FIG. 17 indicates voltage.

As illustrated in FIG. 17, the charging voltage in the case of using the graphite for the negative electrode rises gently. The lithium ions is intercalated between the graphene sheet layers of graphite. Stages of this intercalation change step by step from stage 4 ($LiC_{24}$) to stage 1 ($LiC_6$). Corresponding to the temporal changes of this stage, the charging voltage also changes gently.

In contrast, the charging voltage in the case of using the carbon nanowall for the negative electrode rises sharply. This suggests two possibilities. In the first possibility, the intercalation stage change is ended for a short time, and the lithium is deposited. In the second possibility, the lithium is deposited without intercalation occurring.

### 2-3. Lithium-ion Secondary Battery

As illustrated in FIG. 17, the charging voltage in the charging voltage in the case of using the carbon nanowall for the negative electrode is approximately 0.1 V higher than the charging voltage in the case of using the graphite for the negative electrode.

$$Li^+ + e^- \leftrightarrow Li \; ... \qquad (1)$$

-3.04 V

$$6C + xLi^+ + xe^- \leftrightarrow C_6Li_x \; ... \qquad (2)$$

-2.90 V

$$Li_{1-x}CoO_2 + xLi^+ + xe^- \leftrightarrow LiCoO_2 \; ... \qquad (3)$$

+0.90 V

Formula (1) indicates a case where lithium is deposited or a case where lithium is ionized. Formula (2) indicates a case where lithium ions intercalate or deintercalate between the layers of the graphene structure. Formula (3) indicates a case where lithium cobaltate releases or occludes lithium ions.

When the reaction in formula (1) occurs, the charging voltage is as follows.

```
0.90 V - (-3.04 V) = 3.94 V
```

When the reaction in formula (2) occurs, the charging voltage is as follows.

```
0.90 V - (-2.90 V) = 3.80 V
```

It is considered that a difference between the charging voltage in the case of using the carbon nanowall for the negative electrode and the charging voltage in the case of using the graphite for the negative electrode is caused by the difference between the formula (1) and formula (2). That is, it is considered that when the carbon nanowall is used for the negative electrode, the reaction of formula (1) mainly occurs during charging and discharging, and when the graphite is used for the negative electrode, the reaction of formula (2) mainly occurs during charging and discharging.

### 2-4. Capacity of Carbon Nanowall

A theoretical capacity of graphite is 372 mAh/g. The chemical formula at this case is expressed by $LiC_6$.

The capacity of a carbon nanowall with a height of 1 $\mu$m is 2250000 mAh/g.

```
9.0 mAh / 0.000040 g = 2250000 mAh/g
```

The capacity of the carbon nanowall with the height of 1 $\mu$m is approximately 600 times the theoretical capacity of graphite.

$$2250000 \text{ mAh/g} / 372 \text{ mAh/g} = 600$$

Accordingly, the chemical formula (composition formula) for the Li deposition state in the carbon nanowall is expressed as follows.

$$Li_{600}C_6 (Li_{100}C)$$

### 3. Height Dependence of Carbon Nanowall

#### 3-1. Lithium-ion Secondary Battery

A lithium-ion secondary battery is fabricated in which Li metal is used as the positive electrode used and a carbon nanowall formed on Cu is used as the negative electrode. The electrolytic solution is an electrolytic solution used in the lithium-ion secondary batteries.

#### 3-2. Charging and Discharging Characteristics

FIG. 18 is a graphic chart illustrating discharging characteristics of a lithium-ion secondary battery using a negative electrode including a carbon nanowall with a height of 0 nm. The horizontal axis of FIG. 18 indicates capacity. The vertical axis of FIG. 18 indicates voltage. In this case, there is no carbon nanowall but there is only copper foil, in the negative electrode. As illustrated in FIG. 18, the voltage drops immediately after the start of discharge.

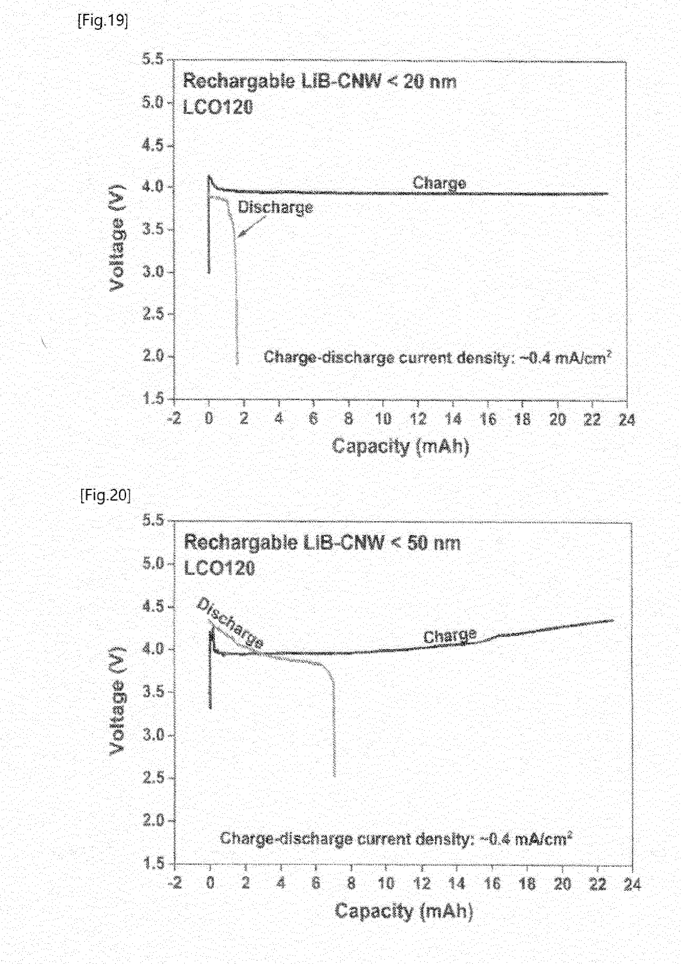

FIG. 19 is a graphic chart illustrating discharging characteristics of a lithium-ion secondary battery using a negative electrode including a carbon nanowall with a height of 20 nm. The horizontal axis of FIG. 19 indicates capacity. The vertical axis of FIG. 19 indicates voltage. The capacity is 1.6 mAh as illustrated in FIG. 19.

FIG. 20 is a graphic chart illustrating discharging characteristics of a lithium-ion secondary battery using a negative electrode including a carbon nanowall with a height of 50 nm. The horizontal axis of FIG. 20 indicates capacity. The vertical axis of FIG. 20 indicates voltage. The capacity is 7.1 mAh as illustrated in FIG. 20.

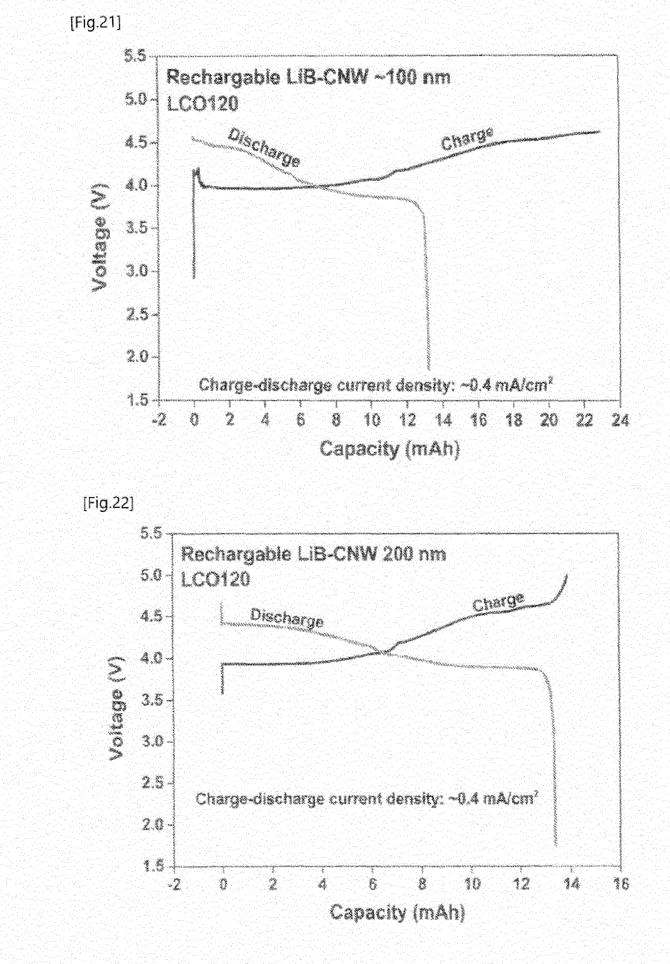

FIG. 21 is a graphic chart illustrating discharging characteristics of a lithium-ion secondary battery using a negative electrode including a carbon nanowall with a height of 100 nm. The horizontal axis of FIG. 21 indicates capacity. The vertical axis of FIG. 21 indicates voltage. The capacity is 13.2 mAh as illustrated in FIG. 21.

FIG. 22 is a graphic chart illustrating discharging characteristics of a lithium-ion secondary battery using a negative electrode including a carbon nanowall with a height of 200 nm. The horizontal axis of FIG. 22 indicates capacity. The vertical axis of FIG. 22 indicates voltage. The capacity is 13.3 mAh as illustrated in FIG. 22.

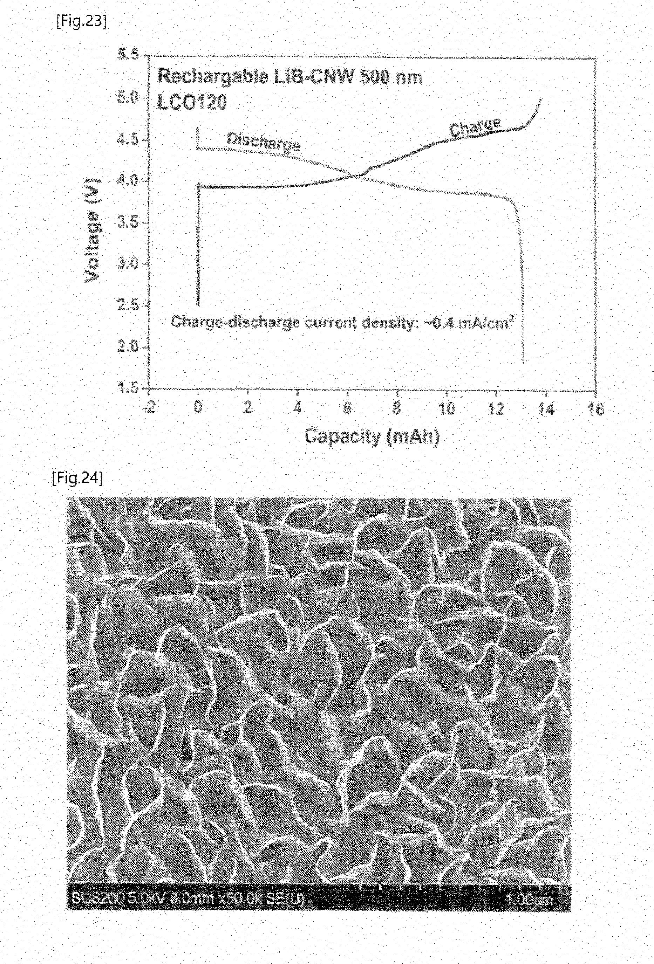

FIG. 23 is a graphic chart illustrating discharging characteristics of a lithium-ion secondary battery using a negative electrode including a carbon nanowall with a height of 500 nm. The horizontal axis of FIG. 23 indicates capacity. The vertical axis of FIG. 23 indicates voltage. The capacity is 13.2 mAh as illustrated in FIG. 23.

Experimental data is summarized in Table 5. As illustrated in Table 5, when the height of the carbon nanowall is equal to or greater than 100 nm, the capacity of the lithium-ion secondary battery is saturated. It is also considered that when the height of the carbon nanowall is equal to or greater than 100 nm, all lithium of the positive electrode is consumed. Therefore, the height of the carbon nanowall is preferably equal to or greater than 100 nm.

[Table 5]

| Height of CNW (nm) | Capacity (mAh) |
|---|---|
| 0 | 0.5 |
| 20 | 1.6 |
| 50 | 7.1 |
| 100 | 13.2 |
| 200 | 13.3 |
| 500 | 13.2 |
| 1000 | 12.5 |

### 3-3. SEM Images

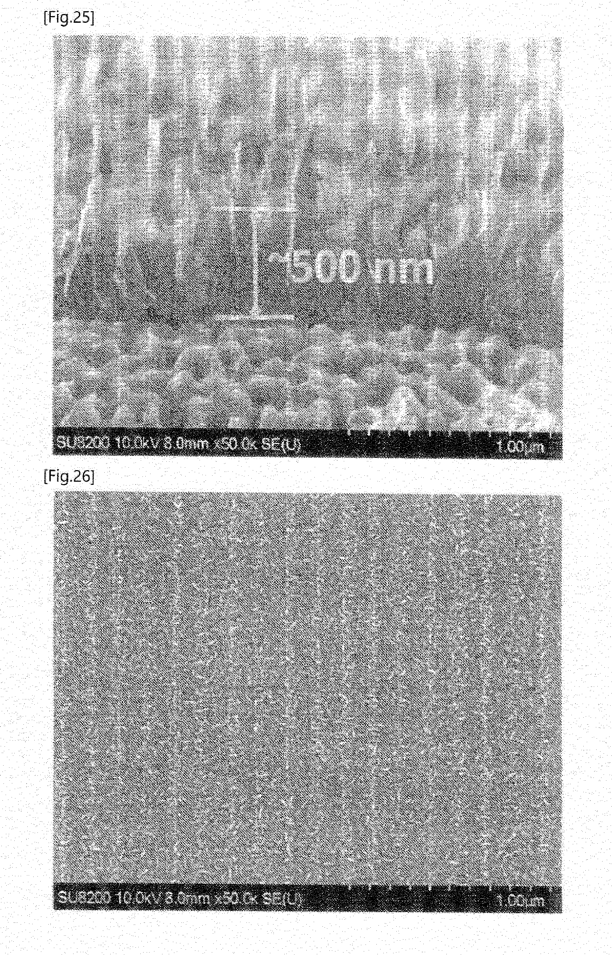

FIG. 24 is a scanning electron micrograph illustrating a surface of the carbon nanowall with a height of 500 nm. FIG. 25 is a scanning electron micrograph illustrating a cross section of the carbon nanowall with the height of 500 nm. The carbon nanowalls are growing greatly.

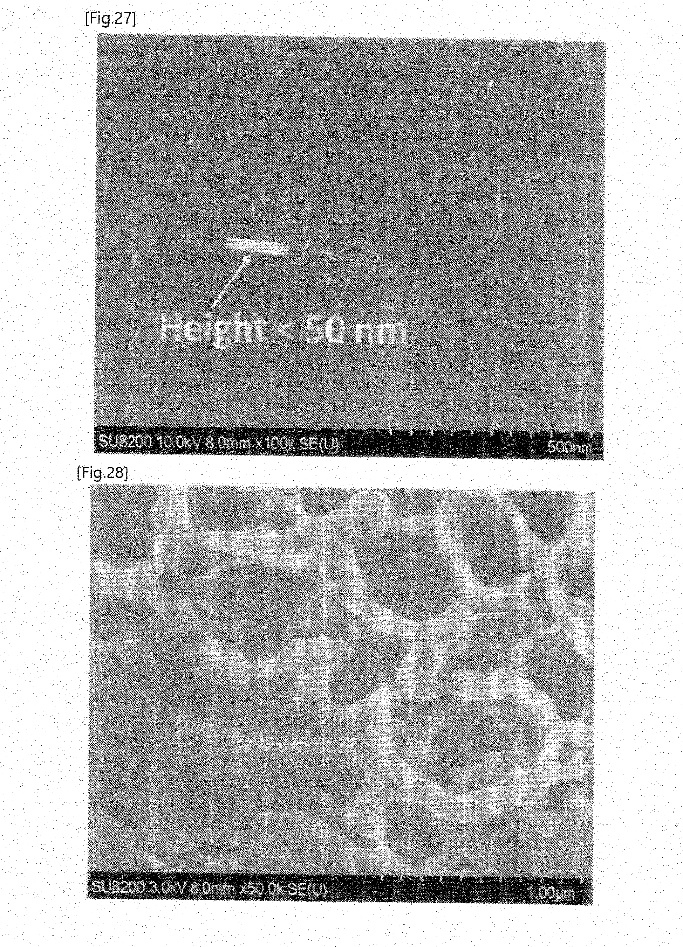

FIG. 26 is a scanning electron micrograph illustrating a surface of the carbon nanowall with a height of 50 nm. FIG. 27 is a scanning electron micrograph illustrating a cross section of the carbon nanowall with the height of 50 nm. The carbon nanowalls are not growing so much.

### 4. Deposition of Lithium (Part 1)

### 4-1. Lithium-ion Secondary Battery

A lithium-ion secondary battery is fabricated in which Li metal is used as the positive electrode used and a carbon nanowall formed on Cu is used as the negative electrode. The electrolytic solution is an electrolytic solution used in the lithium-ion secondary batteries. The height of the carbon nanowall is 200 nm.

### 4-2. SEM Images

FIG. 28 is a scanning electron micrograph (Part 1) illustrating a surface of a carbon nanowall when repeating charging and discharging. FIG. 28 clearly shows the wall of carbon nanowalls.

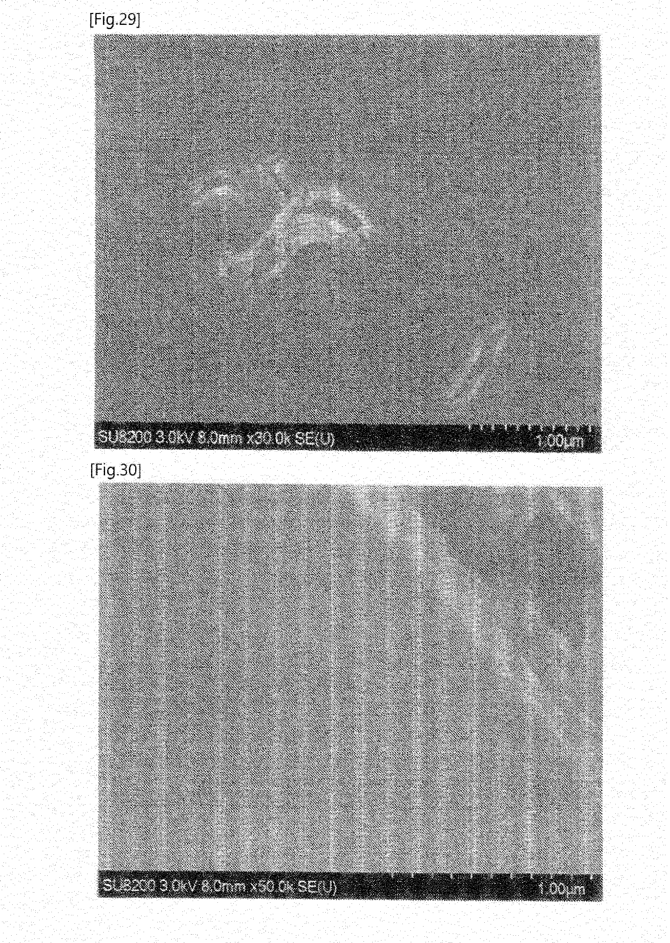

FIG. 29 is a scanning electron micrograph (Part 2) illustrating a surface of a carbon nanowall when repeating charging and discharging. FIG. 29 illustrates an aspect that metal lithium is deposited in a gap between the carbon nanowalls, and the metal lithium fills most of the gap.

FIG. 30 is a scanning electron micrograph (Part 3) illustrating a surface of a carbon nanowall when repeating charging and discharging. FIG. 30 illustrates an aspect that the deposited metal lithium has also filled the upper layer of the carbon nanowall.

As illustrated in FIGs. 29 and 30, the metal lithium is deposited is fills the gaps between carbon nanowalls. Therefore, more lithium ions are involved in the charge-discharge reaction than that of the conventionally examples. It is possible to involve equal to or greater than two lithium ions per carbon atom in the charge-discharge reaction.

The fabricated lithium-ion secondary battery is charged and discharged for 30 cycles. Even after that, no dendrites are observed. It is assumed that this is because the metal lithium is deposited from the surface of the carbon nanowalls as a starting point, and since the crystallinity of the metal lithium is proper, thereby preventing dendrites from being generated.

### 5. Deposition of Lithium (Part 2)

### 5-1. Manufacturing of Lithium-ion Secondary Battery

A coin-type lithium-ion secondary battery is manufactured. The positive electrode current collector P1 is aluminum, and the positive-electrode active material is lithium cobaltate. The negative electrode current collector N1 is copper, and the negative-electrode active material is a carbon nanowall. The electrolytic solution is 1M $LiPF_6$. The positive electrode active material layer is a region 1.6 cm in diameter. The negative electrode active material layer is a region 1.3 cm in diameter. The height of the carbon nanowall is 1 $\mu$m.

### 5-2. Charging

The above-described coin type lithium-ion secondary battery is charged at 0.5 mA for 18 hours.

### 5-3. Deposition of Lithium

The charge Q is expressed by the following equation.

$$Q = 0.5 \text{ mA} \cdot 18 \text{ h} = 32.4 \text{ C}$$

The number N of lithium ions that receive the charge is expressed by the following equation.

$$N = 32.4 / (1.6 \times 10^{-19}) = 2.0 \times 10^{20} \text{ (pieces)}$$

Assume that the lithium ions received electrons at the negative electrode and become lithium crystals. Lithium has a body-centered cubic lattice structure. Two lithium atoms are included into one lattice. The lattice constant of the lithium crystal is 0.35 nm.

The number density n of lithium ions is expressed by the following equation.

$$n = 2.0 \times 10^{20} / \{2 \bullet (0.35 \times 10^{-9})^3\}$$
$$= 4.29 \times 10^{-9} \text{ m}^{-3}$$

The height HL of lithium to be deposited is expressed by the following equation.

$$HL = 4.29 \times 10^{-9} / (0.0065 \times 0.0065 \times 3.14)$$
$$= 32 \times 10^{-6} \text{ m}$$
$$= 32 \text{ μm}$$

### 5-4. Cross Section of Lithium Crystal

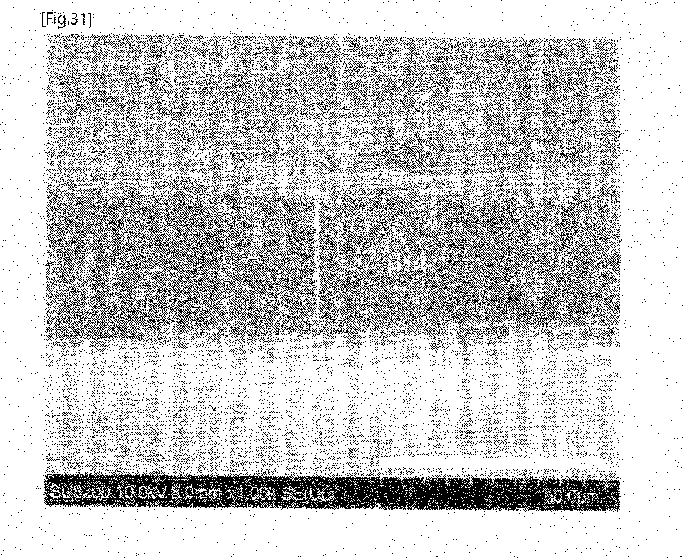

FIG. 31 is a scanning electron micrograph illustrating a cross section of a negative electrode in the lithium-ion secondary battery after charging. As illustrated in FIG. 31, the height of lithium crystal after the charging was 32 um. Therefore, the height of the lithium crystal illustrated in FIG. 31 matches with the above-described calculated result.

### 5-5. X-ray Diffraction

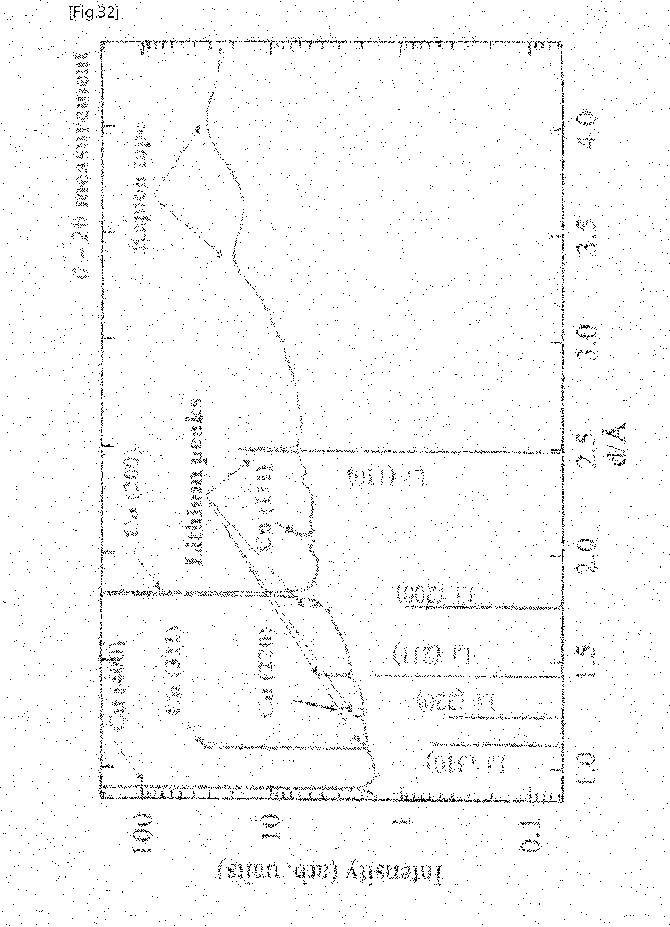

FIG. 32 is a graphic chart illustrating an X-ray diffraction result of the negative electrode in the lithium-ion secondary battery after charging. FIG. 32 illustrates X-ray peaks detected by the θ-2θ method. The horizontal axis of FIG. 32 indicates d/A. The vertical axis of FIG. 32 indicates X-ray intensity.

As illustrated in FIG. 32, the peaks of Li (110), Li (200), Li (211), Li (220), and Li (310) are observed. The peak value of Li (110) is the largest.

5-6. Lithium

From the above, it can be found that the lithium is deposited on the carbon nanowall.

### (Appendix)

An electrode for power storage device in a first aspect includes a current collector and an active material layer on the current collector. The active material layer includes a carbon nanowall. The carbon nanowall is capable of involving, in a charge-discharge reaction, two or more lithium ions per carbon atom in a single charge or discharge.

An electrode for power storage device in a second aspect includes a current collector and an active material layer on the current collector. The active material layer includes a carbon nanowall. The carbon nanowall includes a surface on which lithium can be deposited.

In the electrode for power storage device in a third aspect, the carbon nanowall is capable of involving, in a charge-discharge reaction, two or more lithium ions per carbon atom in a single charge or discharge.

In the electrode for power storage device in a fourth aspect, the active material layer includes an amorphous carbon layer between the current collector and the carbon nanowall.

In the electrode for power storage device in a fifth aspect, a film thickness of the amorphous carbon layer is equal to or more than 10 nm and equal to or less than 300 nm.

In the electrode for power storage device in a sixth aspect, a projection region where the carbon nanowall is projected onto the surface of the current collector does not include other carbon nanowalls except for the projected carbon nanowall.

In the electrode for power storage device in a seventh aspect, an average angle between the current collector and the carbon nanowall are equal to or greater than 80° and equal to or less than 90°.

In the electrode for power storage device in an eighth aspect, a height of the carbon nanowall from the current collector is equal to or greater than 100 nm and equal to or less than 10 $\mu$m.

A power storage device in a ninth aspect includes a positive electrode current collector, a positive electrode active material layer on the positive electrode current collector, a negative electrode current collector, and a negative electrode active material layer on the negative electrode current collector. The negative electrode active material layer includes a carbon nanowall. The carbon nanowall is capable of involving, in a charge-discharge reaction, two or more lithium ions per carbon atom in a single charge or discharge.

A power storage device in a tenth aspect includes a positive electrode current collector, a positive electrode active material layer on the positive electrode current collector, a negative electrode current collector, and a negative electrode active material layer on the negative electrode current collector. The negative electrode active material layer includes a carbon nanowall. The carbon nanowall includes a surface on which lithium can be deposited.

A power storage device in an eleventh aspect includes a positive electrode current collector, a positive electrode active material layer on the positive electrode current collector, a negative electrode current collector, and a negative electrode active material layer on the negative electrode current collector. The positive electrode active material layer contains lithium atoms. The negative electrode active material layer includes a carbon nanowall. The number of lithium atoms that the positive electrode active material layer can contain per unit area is equal to or greater than twice the number of carbon atoms that the negative electrode active material layer can contain per unit area.

In the power storage device in a twelfth aspect, a height of the carbon nanowall from the negative electrode current collector is equal to or greater than 100 nm and equal to or less than 10 um.

## REFERENCE SIGNS LIST

| | |
|---|---|
| LiB1 | Lithium-ion secondary battery |
| PE | Positive electrode |
| P1 | Positive electrode current collector |
| P2 | Positive electrode active material layer |
| NE | Negative electrode |
| N1 | Negative electrode current collector |
| N2 | Negative electrode active material layer |
| CNW1 | Carbon nanowall |
| Sp1 | Separator |
| ES1 | Electrolytic solution |
| V1 | Vessel |
| E1 | End portion |
| R1 | Root portion |
| GS1 | Graphene sheet |

## Claims

1. An electrode for power storage device comprising a current collector and

   an active material layer on the current collector, wherein
   the active material layer comprises a carbon nanowall, and
   the carbon nanowall is capable of involving, in a charge-discharge reaction, two or more lithium ions per carbon atom in a single charge or discharge.

2. An electrode for power storage device comprising

   a current collector and
   an active material layer on the current collector, wherein
   the active material layer comprises a carbon nanowall, and
   the carbon nanowall comprises a surface on which lithium can be deposited.

3. The electrode for power storage device according to claim 2, wherein

the carbon nanowall is capable of involving, in a charge-discharge reaction, two or more lithium ions per one carbon atom in a single charge or discharge.

4. The electrode for power storage device according to any of claims 1-3, wherein
the active material layer includes an amorphous carbon layer between the current collector and the carbon nanowall.

5. The electrode for power storage device according to claim 4, wherein
a film thickness of the amorphous carbon layer is equal to or more than 10 nm and equal to or less than 300 nm.

6. The electrode for power storage device according to any of claims 1-5, wherein
a projection region where the carbon nanowall is projected onto the surface of the current collector does not include other carbon nanowalls except for the projected carbon nanowall.

7. The electrode for power storage device according to any of claims 1-6, wherein
an average angle between the current collector and the carbon nanowall are equal to or greater than 80° and equal to or less than 90°.

8. The electrode for power storage device according to any of claims 1-7, wherein
a height of the carbon nanowall from the current collector is equal to or greater than 100 nm and equal to or less than 10 $\mu$m.

9. A power storage device comprising

a positive electrode current collector,
a positive electrode active material layer on the positive electrode current collector,
a negative electrode current collector, and
a negative electrode active material layer on the negative electrode current collector, wherein
the negative electrode active material layer comprises a carbon nanowall, and
the carbon nanowall is capable of involving, in single charge or discharge reaction, two or more lithium ions per one carbon atom in a single charge or discharge.

10. A power storage device comprising

a positive electrode current collector,
a positive electrode active material layer on the positive electrode current collector,
a negative electrode current collector, and
a negative electrode active material layer on the negative electrode current collector, wherein
the negative electrode active material layer comprises a carbon nanowall, and
the carbon nanowall comprises a surface on which lithium can be deposited.

11. A power storage device comprising

a positive electrode current collector,
a positive electrode active material layer on the positive electrode current collector,
a negative electrode current collector, and
a negative electrode active material layer on the negative electrode current collector, wherein
the positive electrode active material layer contains lithium atoms,
the negative electrode active material layer comprises a carbon nanowall, and
the number of lithium atoms that the positive electrode active material layer can contain per unit area is equal to or greater than twice the number of carbon atoms that the negative electrode active material layer can contain per unit area.

12. The power storage device according to any one of claims 9-11, wherein
a height of the carbon nanowall from the negative electrode current collector is equal to or greater than 100 nm and equal to or less than 10 um.

[Fig. 1]

LIB1

PE {
P1a
P2
P1
P2
P1b

Sp1

ES1

NE {
N2 (CNW1)
N1a
N1
N1b
N2 (CNW1)

V1

[Fig.4]

[Fig.5]

CNW1

W1

D1/2

I1

[Fig.6]

CNW1(d)

E1

E1

CNW1(c)

N1a

N1

θ

θ

R1

PR3

R1

N1b

[Fig.7]

o: Li IONS

[Fig.8]

[Fig.9]

[Fig.10]

[Fig.11]

[Fig.12]

[Fig.13]

CNW=1μm, I=0.5mA

—— 1um-charge    – – 1um-discharge

VOLTAGE (V)

CAPACITY (mAh)

[Fig.14]

CNW=4μm, I=0.5mA

—— 4um-charge    – – – 4um-discharge

VOLTAGE (V)

CAPACITY (mAh)

[Fig.15]

CNW=10μm, I=0.5mA

— 10um-charge — — 10um-discharge

VOLTAGE (V)

CAPACITY (mAh)

[Fig.16]

Graphite, I=0.5mA

— Graphite-charge — — Graphite-discharge

VOLTAGE (V)

CAPACITY (mAh)

[Fig.17]

Charge : CNW vs. Graphite

4um-charge   Graphite-charge

[Fig.18]

[Fig.19]

[Fig.20]

[Fig.21]

[Fig.22]

[Fig.23]

[Fig.24]

[Fig.25]

[Fig.26]

[Fig.27]

[Fig.28]

[Fig.29]

SU8200 3.0kV 8.0mm x30.0k SE(U)                1.00μm

[Fig.30]

SU8200 3.0kV 8.0mm x50.0k SE(U)                1.00μm

[Fig.31]

[Fig.32]

**INTERNATIONAL SEARCH REPORT**

International application No.

PCT/JP2021/014103

### A. CLASSIFICATION OF SUBJECT MATTER

Int.Cl. H01M4/06(2006.01)i, H01M4/133(2010.01)i, H01M4/587(2010.01)i,
H01M4/66(2006.01)i, H01G11/06(2013.01)i, H01G11/28(2013.01)i,
H01G11/36(2013.01)i, H01G11/50(2013.01)i, H01M10/0525(2010.01)i,
C01B32/18(2017.01)i, H01M6/16(2006.01)i
FI: H01M4/587, H01M4/133, H01M4/06W, H01M10/0525, H01M6/16Z, H01M4/66A,
H01G11/06, H01G11/36, H01G11/28, C01B32/18, H01G11/50
According to International Patent Classification (IPC) or to both national classification and IPC

### B. FIELDS SEARCHED

Minimum documentation searched (classification system followed by classification symbols)
Int.Cl. H01M4/06, H01M4/133, H01M4/587, H01M4/66, H01G11/06, H01G11/28,
H01G11/36, H01G11/50, H01M10/0525, C01B32/18, H01M6/16

Documentation searched other than minimum documentation to the extent that such documents are included in the fields searched
Published examined utility model applications of Japan    1922–1996
Published unexamined utility model applications of Japan    1971–2021
Registered utility model specifications of Japan    1996–2021
Published registered utility model applications of Japan    1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2010-9980 A (PUBLIC UNIVERSITY CORPORATION YOKOHAMA CITY UNIVERSITY) 14 January 2010 (2010-01-14), claims 1-2, 6, example 1 | 1-12 |
| X | WO 2014/069310 A1 (SANGO CO., LTD.) 08 May 2014 (2014-05-08), claims 1-10, paragraphs [0031]- [0035] | 1-5, 8-12 |
| A | | 6-7 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 June 2021 | 15 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2021/014103

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2013/187452 A1 (SANGO CO., LTD.) 19 December 2013 (2013-12-19) | 1-12 |
| A | WO 2014/129545 A1 (SUMITOMO ELECTRIC INDUSTRIES, LTD.) 28 August 2014 (2014-08-28) | 1-12 |
| A | JP 2020-4627 A (YU, X. L.) 09 January 2020 (2020-01-09) | 1-12 |
| A | JP 2011-103256 A (TOYOTA MOTOR CORPORATION) 26 May 2011 (2011-05-26) | 1-12 |
| A | JP 2011-103255 A (TOYOTA MOTOR CORPORATION) 26 May 2011 (2011-05-26) | 1-12 |

Form PCT/ISA/210 (second sheet) (January 2015)

| INTERNATIONAL SEARCH REPORT | International application No. |
|---|---|
| Information on patent family members | PCT/JP2021/014103 |

```
JP 2010-9980 A      14 January 2010      (Family: none)

WO 2014/069310 A1  08 May 2014          US 2015/0311526 A1
                                        claims 1-20, paragraphs [0048]-[0052]
                                        EP 2913870 A1
                                        CN 104798226 A
                                        KR 10-2015-0079888 A

WO 2013/187452 A1  19 December 2013     US 2014/0170490 A1
                                        EP 2736105 A1
                                        CN 103718347 A
                                        KR 10-2015-0027022 A

WO 2014/129545 A1  28 August 2014       US 2015/0375210 A1
                                        CN 105073252 A

JP 2020-4627 A      09 January 2020      (Family: none)

JP 2011-103256 A   26 May 2011          US 2012/0225353 A1
                                        KR 10-2012-0062935 A
                                        CN 102668180 A

JP 2011-103255 A   26 May 2011          US 2012/0214065 A1
                                        KR 10-2012-0062934 A
                                        CN 102668181 A
```

Form PCT/ISA/210 (patent family annex) (January 2015)

**EP 4 131 459 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2668678 B